(19)

Europäisches Patentamt

European Patent Office

Office européen des brevets

(11) **EP 4 492 862 A2**

(12) **EUROPEAN PATENT APPLICATION**

(43) Date of publication:
**15.01.2025 Bulletin 2025/03**

(21) Application number: **24200898.5**

(22) Date of filing: **17.03.2015**

(51) International Patent Classification (IPC):
**H04W 28/04** (2009.01)

(52) Cooperative Patent Classification (CPC):
**H04L 1/0025; H04L 1/1671; H04L 1/20**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2014 US 201461954429 P**
**08.05.2014 US 201461990529 P**
**09.05.2014 US 201461991090 P**

(62) Document number(s) of the earlier application(s) in accordance with Art. 76 EPC:
**15715011.1 / 3 120 476**

(71) Applicant: **InterDigital Patent Holdings, Inc.**
**Wilmington, DE 19809 (US)**

(72) Inventors:
- **WANG, Xiaofei**
  **Cedar Grove (US)**
- **ZHANG, Guodong**
  **Syosset (US)**

- **LOU, Hanqing**
  **Syosset (US)**
- **OTERI, Oghenekome**
  **San Diego (US)**
- **GHOSH, Monisha**
  **Chicago (US)**
- **OLESEN, Robert L.**
  **Huntington (US)**

(74) Representative: **Meissner Bolte Partnerschaft mbB**
**Patentanwälte Rechtsanwälte**
**Postfach 86 06 24**
**81633 München (DE)**

Remarks:
- This application was filed on 17-09-2024 as a divisional application to the application mentioned under INID code 62.
- Claims filed after the date of filing of the application (Rule 68(4) EPC).

(54) **METHODS FOR RECEPTION FAILURE IDENTIFICATION AND REMEDIATION FOR WIFI**

(57) A method and apparatus are disclosed for identifying different types of reception failures of a packet. A station (STA) may receive a packet from a transmitting STA and determine whether it is properly received by performing at least one check of a plurality of checks. The STA may determine that reception of the packet was not properly received due to a reception failure based on the at least one check and may generate a negative acknowledgement signal (NACK) signal including an indication of the reception failure cause to enable the transmitting STA to remediate the reception failure cause. The least one check includes determining whether a frame check sequence (FCS) passes, whether a CSMA wireless medium remains busy immediately after an expected packet transmission time, whether there is a power spike during reception of the signal, or whether there are Short training field (STF) and Long Training Field (LTF) correlations.

**EP 4 492 862 A2**

**Description**

**CROSS REFERENCE TO RELATED APPLICATIONS**

This application claims the benefit of U.S. Provisional Application Serial No. 61/954,429 filed March 17, 2014, U.S. Provisional Application Serial No. 61/990,529 filed May 8, 2014, and U.S. Provisional Application Serial No. 61/991,090 filed May 9, 2014, the contents of which are hereby incorporated by reference herein.

**BACKGROUND**

A WLAN in Infrastructure basic service set (BSS) mode has an Access Point (AP) for the BSS and one or more stations (STA) associated with the AP. The AP typically has access or interface to a distribution system (DS) or another type of wired/wireless network that carries traffic in and out of the BSS. Traffic to STAs that originates from outside the BSS arrives through the AP and is delivered to the STAs. Traffic originating from STAs to destinations outside the BSS is sent to the AP to be delivered to the respective destinations. Traffic between STAs within the BSS may also be sent through the AP where the source STA sends traffic to the AP and the AP delivers the traffic to the destination STA. Such traffic between STAs within a BSS is really peer-to-peer traffic. Such peer-to-peer traffic may also be sent directly between the source and destination STAs with direct link setup (DLS) using an IEEE 802.11e DLS or an IEEE 802.11z tunneled DLS (TDLS). A WLAN in Independent BSS mode has no AP, and STAs communicate directly with each other.

In these systems, different types of reception failures may not be able to be differentiated, often leading to incorrect behaviors of wireless devices. Therefore, it is desirable to correctly identify the different types of reception failures and remediate reception failures without adding excessive overhead to the transmission of packets.

**SUMMARY**

Methods and apparatus for identifying different types of reception failures of a packet are disclosed. A station (STA) may transmit a frame containing a Reception Failure Identification and Remediation (ReFIRe) measurement capability element. The STA may receive a frame with a ReFIRe Measurement and Reporting Request element. The STA may receive a data packet, and may perform a ReFIRe measurement based on the received data packet and on the received ReFIRe Measurement and Reporting Request element. The STA may transmit a frame with a ReFIRe Measurement and Reporting Report element, wherein the ReFIRe Measurement and Reporting Report element is based on the ReFIRe measurement. The ReFIRe measurement may indicate a type of reception failure.

In one embodiment, a STA may receive a packet via a carrier sense multiple access (CSMA) wireless medium from a transmitting STA. The STA may then determine whether a packet is properly received within a received signal by performing at least one check of a plurality of checks. The STA may then determine that reception of the packet was not properly received due to a reception failure based on at least one check. The STA may then generate a negative acknowledgement signal (NACK) signal including an indication of the reception failure cause to enable the transmitting STA to remediate the reception failure cause. The at least one check may include determining whether a frame check sequence (FCS) passes, whether the CSMA wireless medium remains busy immediately after an expected packet transmission time, whether there is a power spike during reception of the signal, or whether there are Short training field (STF) and Long Training Field (LTF) correlations.

**BRIEF DESCRIPTION OF THE DRAWINGS**

A more detailed understanding may be had from the following description, given by way of example in conjunction with the accompanying drawings wherein:

FIG. 1A is a system diagram of an example communications system in which one or more disclosed embodiments may be implemented;

FIG. 1B is a system diagram of an example wireless transmit/receive unit (WTRU) that may be used within the communications system illustrated in FIG. 1A;

FIG. 1C is a system diagram of an example radio access network and an example core network that may be used within the communications system illustrated in FIG. 1A;

FIG. 2 is an illustration of enhanced distributed channel access (EDCA) operation;

FIG. 3 shows the current WLAN tools used to detect that a packet is correctly received;

FIG. 4 shows an example design of the Coordination Request Information Element (IE);

FIG. 5 shows an alternative example design of the Coordination Response IE;

FIG. 6 illustrates reception failure due to partially overlapped packets;

FIG. 7 illustrates reception failure due to a collision;

FIG. 8 is an example flowchart of reception failure case identification;

FIG. 9 is another example flowchart of reception failure case identification;

FIG. 10 illustrates packet arrival detection for desired and interfering packets;

FIG. 11 shows Pstat as a function of SIR;

FIG. 12 shows an example design of a ReFIRe measurement reporting and utilization capability information element;

FIG. 13 shows an example design of a ReFIRe measurement reporting request element;

FIG. 14 shows an example design of a PHY and MAC layer Measurement and Reporting field;

FIG. 15 shows an example design of the ReFIRe Measurement Report Element;

FIG. 16 shows an example overall flowchart of the ReFIRe measurement and reporting procedures;

FIG. 17 shows a QMF Policy element as defined in IEEE 802.11ae standard;

FIG. 18 shows the format of the QACM Header subfield of the QACM field as defined in the IEEE 802.11ae standard;

FIG. 19 is a diagram of an example negative acknowledgement (NACK) frame for reception failure remediation;

FIG. 20 is a diagram of another example NACK frame for reception failure remediation;

FIG. 21 is a diagram of an example reception failure remediation procedure using request to send (RTS)/clear to send (CTS);

FIG. 22 is a diagram of an example reception failure remediation procedure using immediate retransmission;

FIG. 23 is a diagram an example modified aggregated medium access control (MAC) protocol data unit (A-MPDU) packet; and

FIG. 24 is a diagram of an example partial retransmission with a separately coded MAC header.

## DETAILED DESCRIPTION

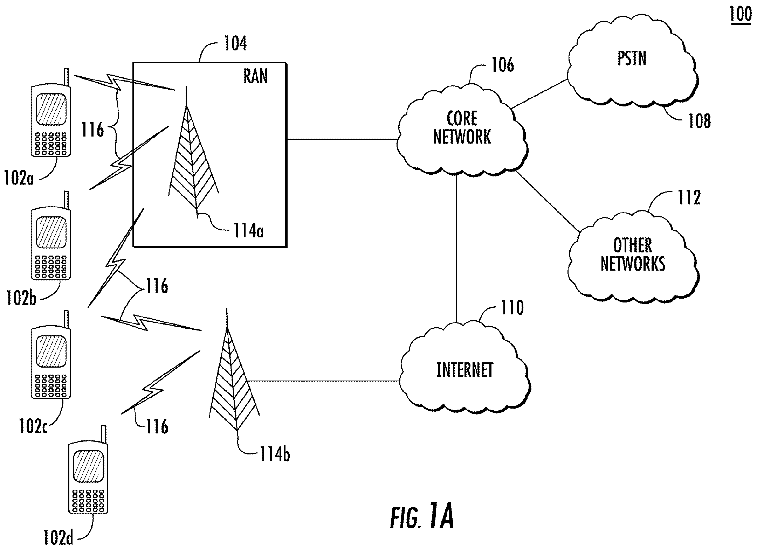

FIG. 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal frequency-division multiplexing (OFDM), orthogonal FDMA (OFDMA), single-carrier FDMA (SC-FDMA), and the like.

As shown in FIG. 1A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the other networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple-output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDM, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

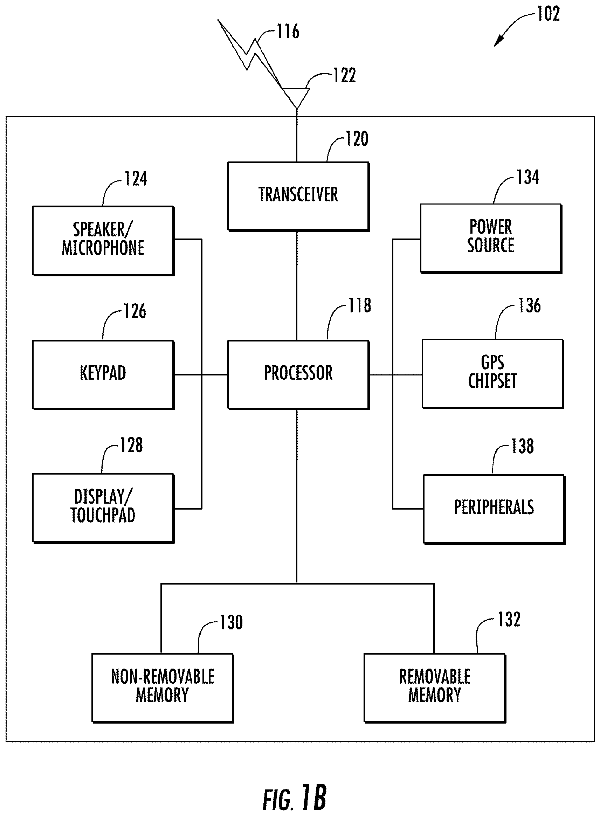

FIG. 1B is a system diagram of an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

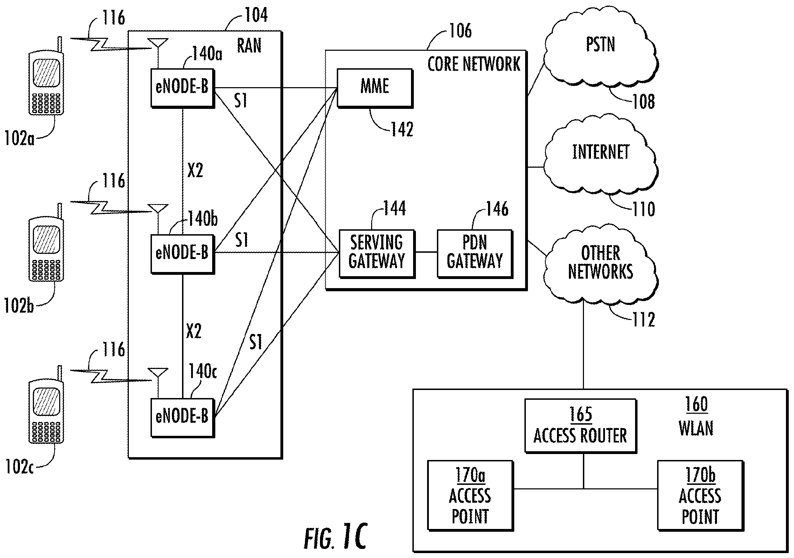

FIG. 1C is a system diagram of the RAN 104 and the core network 106 according to an embodiment. As noted above, the RAN 104 may employ an E-UTRA radio technology to communicate with the WTRUs 102a, 102b, 102c over the air interface 116. The RAN 104 may also be in communication with the core network 106.

The RAN 104 may include eNode-Bs 140a, 140b, 140c, though it will be appreciated that the RAN 104 may include any number of eNode-Bs while remaining consistent with an embodiment. The eNode-Bs 140a, 140b, 140c may each include one or more transceivers for communicating with the WTRUs 102a, 102b, 102c over the air interface 116. In one embodiment, the eNode-Bs 140a, 140b, 140c may implement MIMO technology. Thus, the eNode-B 140a, for example, may use multiple antennas to transmit wireless signals to, and receive wireless signals from, the WTRU 102a.

Each of the eNode-Bs 140a, 140b, 140c may be associated with a particular cell (not shown) and may be configured to handle radio resource management decisions, handover decisions, scheduling of users in the uplink and/or downlink, and the like. As shown in FIG. 1C, the eNode-Bs 140a, 140b, 140c may communicate with one another over an X2 interface.

The core network 106 shown in FIG. 1C may include a mobility management entity gateway (MME) 142, a serving gateway 144, and a packet data network (PDN) gateway 146. While each of the foregoing elements are depicted as part of the core network 106, it will be appreciated that any one of these elements may be owned and/or operated by an entity other than the core network operator.

The MME 142 may be connected to each of the eNode-Bs 140a, 140b, 140c in the RAN 104 via an S1 interface and may serve as a control node. For example, the MME 142 may be responsible for authenticating users of the WTRUs 102a, 102b, 102c, bearer activation/deactivation, selecting a particular serving gateway during an initial attach of the WTRUs 102a, 102b, 102c, and the like. The MME 142 may also provide a control plane function for switching between the RAN 104 and other RANs (not shown) that employ other radio technologies, such as GSM or WCDMA.

The serving gateway 144 may be connected to each of the eNode Bs 140a, 140b, 140c in the RAN 104 via the S1 interface. The serving gateway 144 may generally route and forward user data packets to/from the WTRUs 102a, 102b, 102c. The serving gateway 144 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 144 may also be connected to the PDN gateway 146, which may provide the WTRUs 102a, 102b, 102c with access to packet-switched networks, such as the Internet 110, to facilitate communications between the WTRUs 102a, 102b, 102c and IP-enabled devices.

The core network 106 may facilitate communications with other networks. For example, the core network 106 may provide the WTRUs 102a, 102b, 102c with access to circuit-switched networks, such as the PSTN 108, to facilitate communications between the WTRUs 102a, 102b, 102c and traditional land-line communications devices. For example, the core network 106 may include, or may communicate with, an IP gateway (e.g., an IP multimedia subsystem (IMS) server) that serves as an interface between the core network 106 and the PSTN 108. In addition, the core network 106 may provide the WTRUs 102a, 102b, 102c with access to the networks 112, which may include other wired or wireless networks that are owned and/or operated by other service providers.

Other network 112 may further be connected to an IEEE 802.11 based wireless local area network (WLAN) 160. The WLAN 160 may include an access router 165. The access router may contain gateway functionality. The access router 165 may be in communication with a plurality of access points (APs) 170a, 170b. The communication between access router 165 and APs 170a, 170b may be via wired Ethernet (IEEE 802.3 standards), or any type of wireless communication protocol. AP 170a is in wireless communication over an air interface with WTRU 102d.

For exemplary purposes the embodiments described herein are implemented by STAs and APs. However, the embodiments described herein may also be implemented by other wireless devices capable of operating in a wireless communications network including but not limited to a WTRU, base station (BS), eNode B, UE, or network node.

With the proliferation of personal mobile devices and applications such as meters and sensors, it is expected that WiFi systems, and associated APs, will require support for a much larger number of devices than those currently in operation. The required number of STAs which may need to be supported may be much more than the limit of 2,007 devices per BSS. In the IEEE 802.11ah standardization work, for example, a BSS may be required to support up to 6,000 devices. Dense STA and AP deployment use cases are also being discussed in the IEEE 802.11 High Efficiency WLAN (HEW) Study Group. Dense STA and AP deployment use cases are also proposed for the 802.11ax Task Group.

New spectrum is being allocated in various countries around the world for wireless communication systems such as WLANs. Channels allocated in this spectrum are often quite limited in size and bandwidth. In addition, the spectrum may be fragmented in that available channels may not be adjacent, and it may not be possible to combine them to support larger transmission bandwidths. Such is the case, for example, in the spectrum allocated below 1GHz in various countries. WLAN systems built on the IEEE 802.11 standard, for example, may be designed to operate in such a spectrum. Given the limitations of such a spectrum, the WLAN systems may only be able to support smaller bandwidths and lower data rates compared to High Throughput (HT)/Very High Throughput (VHT) WLAN systems based, for example, on the IEEE 802.11n/802.11ac standards, respectively.

The IEEE 802.11ah Task Group (TG) has been established to develop solutions to support WiFi system in the sub-1 GHz band. The IEEE 802.11ah TG is targeting achievement of the following requirements: an OFDM physical layer (PHY) operating below 1 GHz in license-exempt bands excluding TV White Space (TVWS); enhancements to the media access control layer (MAC) to support the Physical Layer (PHY) and coexistence with other systems (e.g., IEEE 802.15.4 and IEEE P802.15.4g); and optimization of rate versus range performance (range up to 1 km (outdoor) and data rates > 100 Kbit/s). The following use cases have been adopted by the IEEE 802.11ah TG: Use Case 1: Sensors and meters; Use Case 2: Backhaul Sensor and meter data; and Use Case 3: Extended range Wi-Fi for Cellular offloading.

The spectrum allocation in some countries is quite limited. For example, in China the 470-566 and 614-787 MHz bands only allow 1MHz bandwidth. Therefore, there will be a need to support a 1MHz only option, in addition to a 2MHz mode. The IEEE 802.11ah PHY is required to support 1, 2, 4, 8, and 16 MHz bandwidths.

The IEEE 802.11ah PHY operates below 1 GHz and is based on the IEEE 802.11ac PHY. To accommodate the narrow bandwidths required by IEEE 802.11ah, the IEEE 802.11ac PHY is down-clocked by a factor of 10. While support for 2, 4, 8, and 16 MHz can be achieved by the 1/10 down-clocking described above, support for the 1 MHz bandwidth requires a new PHY definition with an FFT size of 32.

Recently, the IEEE 802.11 High Efficiency WLAN (HEW) Study Group (SG) was created to explore the scope and purpose of a possible, future amendment to enhance the Quality of Experience (QoE) for a broad spectrum of wireless users in many usage scenarios including high-density scenarios in the 2.4 GHz and 5 GHz bands. New use cases which support dense deployments of APs, and STAs, and associated Radio Resource Management (RRM) technologies are being considered by the HEW SG.

The IEEE 802.11ax TG is exploring the scope and purpose of a future amendment to enhance the QoE for a broad spectrum of wireless users in many usage scenarios, including, for example, high-density scenarios in the 2.4 and 5 GHz bands. New use cases that support dense deployments of APs, STAs and associated RRM technologies may be considered for IEEE 802.11ax.

Potential applications for HEW include emerging usage scenarios such as data delivery for stadium events, high user density scenarios such as train stations or enterprise/retail environments, evidence for an increased dependence on video delivery, and wireless services for medical applications.

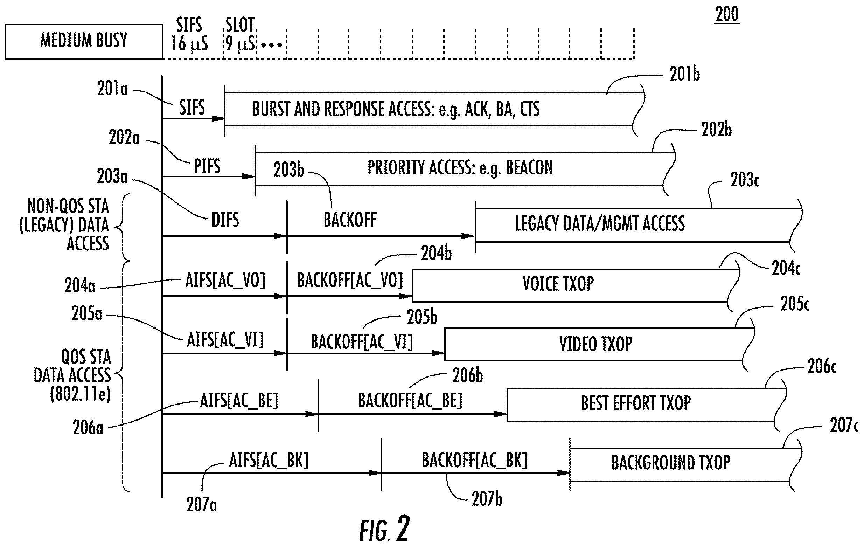

Enhanced distributed channel access (EDCA) is an extension of the basic Distributed Coordination Function (DCF) introduced in the IEEE 802.11 standard to support prioritized QoS. The operation of EDCA in IEEE 802.11n is shown in FIG. 2. Point Coordination Function (PCF) uses contention free channel access to support time-bounded services. PCF also supports polling by an AP. The AP sends a polling message after waiting for a PCF Interframe Space (PIFS). If the client has nothing to transmit, it returns a null data frame. Since PIFS is shorter than a DIFS, it may lock out all asynchronous traffic. PCF is deterministic and fair, and is efficient for both low duty-cycle and heavy/bursty traffic.

FIG. 2 is a diagram showing the various IEEE 802.11 priority levels 200. Acknowledgments (ACK), block acknowledgments (BA), and clear-to-send (CTS) messages 201b may be sent after a Short Interframe Space (SIFS) 201a. Beacon messages 202b may be sent after a PIFS 202a. Legacy data and management access 203c may be permitted following a Distributed Coordination Function (DCF) Interframe Space (DIFS) 203a and back off period 203b. A voice transmit opportunity (TXOP) 204c may be permitted following an Arbitration Interframe Space (AIFS) for the voice access category (AC_VO) 204a and back off period 204b. A video TXOP 205c may be permitted following an AIFS for the video access category (AC_VI) 205a and back off period 205b. A best effort TXOP 206c may be permitted following an AIFS for the best effort access category (AC_BE) 206a and back off period 206b. A background TXOP 207c may be permitted following an AIFS for the background access category (AC_BK) 207a and back off period 207b.

Hybrid Coordination Function (HCF) Controlled Channel Access (HCCA) is an enhancement of PCF. With HCCA, an AP may poll a STA during both contention periods (CPs) and contention-free periods (CFPs). APs and STAs may also transmit multiple frames under one poll.

In current WLAN specifications, transmitting and receiving STAs do not differentiate between types of reception failures. When a transmitting STA transmits a packet and does not receive an ACK, the transmitting STA may assume that a collision has occurred. The transmitting STA may then conduct exponential backoff. A receiving STA, if it cannot receive a packet correctly, may wait an extended interframe space (EIFS) before attempting to conduct medium access.

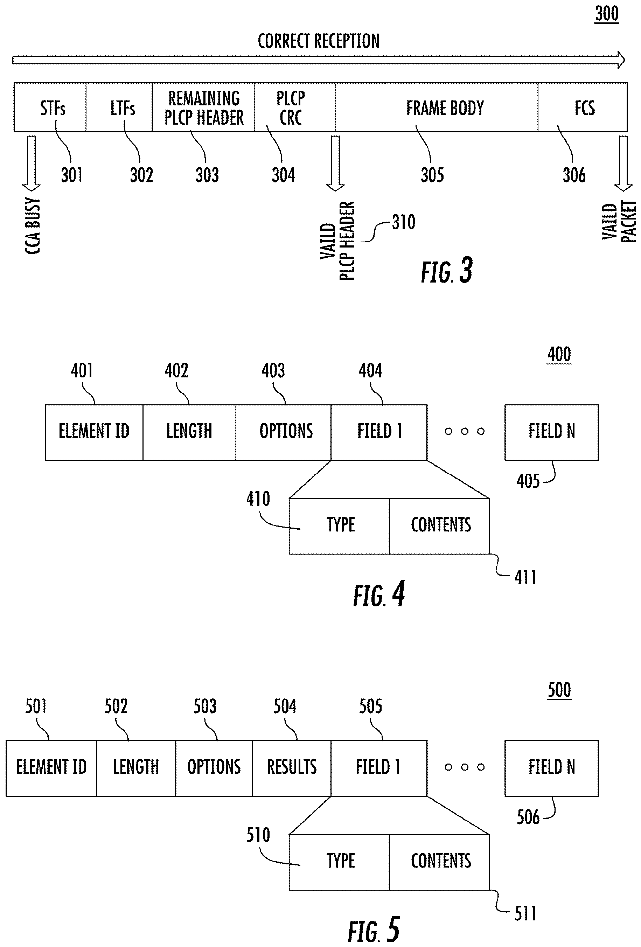

FIG. 3 is a diagram 300 illustrating three example tests that may be used at the receiving STA to detect whether a packet has been correctly received. Short training fields (STFs) 301 and Long Training Fields (LTFs) 302 are part of the WLAN Physical Layer Convergence Protocol (PLCP) header. Other fields may be present in the remaining portion of the PLCP header 303. The receiving STAs may use these fields to detect the presence of any WLAN packets. The PLCP header cyclic redundancy check (CRC) field 304 is part of the WLAN PLCP header. The receiving STA may use the PLCP header CRC field 304 to verify whether a valid PLCP header 310 has been received. The Frame Check Sequence (FCS) field 306 (which may be, for example, a frame body CRC) is part of the MAC frame body 305. The receiving STA's MAC layer may use the FCS field 306 to determine whether a WLAN packet has been correctly received.

Several methods have been proposed for WiFi reception failure identification and remediation. For example, multiple reference signals may be inserted in the form of LTFs in the frame body of the WLAN packets. A partially overlapping packet collision may be detected when some of the reference signals cannot be correctly recovered. A receiving STA, when detecting that a packet has not been correctly received, may send the received version of the packet to the transmitting STA. The transmitting STA may then compare the transmitted version and the received version of the packet to identify the cause of the reception failure. Also, packet collision probability may be estimated based on the current medium reservation status, such as successful Request to Send (RTS)/Clear to Send (CTS) exchanges.

Methods for inter-AP coordination have been developed to conduct coordination for a variety of parameters and settings for OBSS including QoS load and settings, primary and coordination channels, TXOP, and uplink (UL) access and traffic indication map (TIM) indications.

Some related frame designs have been proposed as well. FIG. 4 is an example Coordination Request information element (IE) 400. The Coordination Request IE 400 may contain an element ID 401, length 402, options 403, and fields such as field 1 404 to field N 405. Each field may include a type 410 and contents 411.

FIG. 5 is an example Coordination Response IE 500. The Coordination Response IE 500 may contain an element ID 501, length 502, options 503, results 504, and fields such as field 1 505 to field N 506. Each field may include a type 510 and contents 511.

Additionally or alternatively, interference and neighboring BSS reporting methods are also proposed which may be used as a part of the inter-BSS coordination process.

In WiFi systems, different types of reception failures may not be able to be differentiated, often leading to incorrect behaviors of WiFi devices. Incorrect or sub-optimal means of handling transmission/reception failure may have contributed to the phenomena of excessive retries reported in WiFi, which may yield low MAC efficiency and long packet delay and may waste of precious channel resources. Therefore, it is desirable to overcome these issues with procedures and measurements to correctly identify the different types of reception failures and remediate reception failures without adding excessive overhead to the transmission of WiFi packets.

The methods, and apparatuses disclosed herein address the issues identified above. The following example cases of reception failures are defined for the purpose of failure identification and remediation.

In Case 1, a packet fails because it uses a Modulation and Coding Scheme (MCS) that is too aggressive for the frame body. For example, the PLCP header is correctly decoded, and it indicates that the MCS used for the frame body is higher than the one used for the PLCP header. A FCS check of the frame body fails.

In Case 2, a received packet fails due to partially overlapping packets. For example, a high received power level of the PLCP header is observed (such as by using a Received Signal Strength Indicator (RSSI)/Received Channel Power Indicator (RCPI)). The PLCP header of the first received packet may be decoded correctly. A sudden power level change may be observed during the rest of the packet reception, e.g., a RSSI/RCPI level may increase significantly during the reception process.

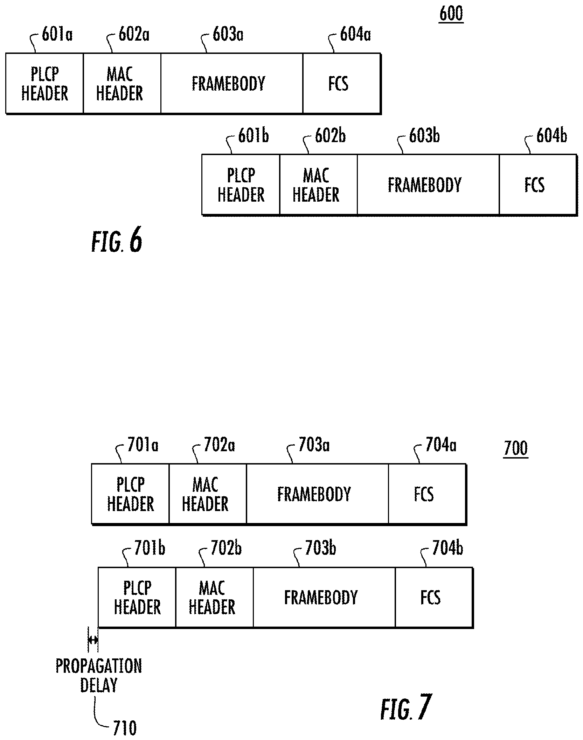

FIG. 6 is an example of a partially overlapping packet 600, which may result in a significant RSSI/RCPI level increase as described above. As shown in FIG. 6, packet 1 may include a PLCP header 601a, MAC header 602a, frame body 603a, and FCS 604a. Similarly, packet 2 may include a PLCP header 601b, MAC header 602b, frame body 603b, and FCS 604b. In an overlapping packet scenario, the PLCP header 601b of packet 2 may overlap with the frame body 603a of packet 1. This overlap may result in a FCS check of the frame body that fails, and the channel medium may remain busy after an indicated length of the first packet (which may be indicated in the PLCP header).

In Case 3, noise or white noise-like interference may cause reception failure. For example, a Clear Channel Assessment (CCA) may indicate that the channel is busy, and the received signal at the STA has a low power level. A preamble may not be correctly detected.

In Case 4, a received packet may fail due to a collision. FIG. 7 illustrates an example of a received packet failing due to a collision 700. As shown in FIG. 7, packet 1 may include a PLCP header 701a, MAC header 702a, frame body 703a, and FCS 704a. Similarly, packet 2 may include a PLCP header 701b, MAC header 702b, frame body 703b, and FCS 704b. A propagation delay 710 is also shown between the packets. In this example, high power level is observed, e.g., using a RSSI/RCPI. Strong STF/LTF correlation may also be observed. However, a SIG/Serviced field of the PLCP header may not be decoded correctly.

MAC designs have been proposed to enable HARQ for WiFi in including: ACK/NACK feedback for HARQ, HARQ Capability Indication, various MAC designs to enable HARQ in WiFi including leveraging mechanisms such as Speed Frame Exchange, TXOP, and Multiple Stop and Wait. However, the designs do not differentiate different types of reception failures.

PHY designs have been proposed to enable HARQ for WiFi in including: physical layer frame design, MAC header design, HARQ retransmission procedures, PSDU frame aggregation with HARQ, and LDPC design with HARQ system. Retransmission methods designed for HARQ combining in which the transmitter retransmits the entire packet or a redundancy version of the packet have been proposed. HARQ retransmission with A-PSDU format with a detailed frame format and retransmission procedures has also been discussed.

The PHY and MAC procedures described herein may be used to identify the different types of reception failures defined in the cases above.

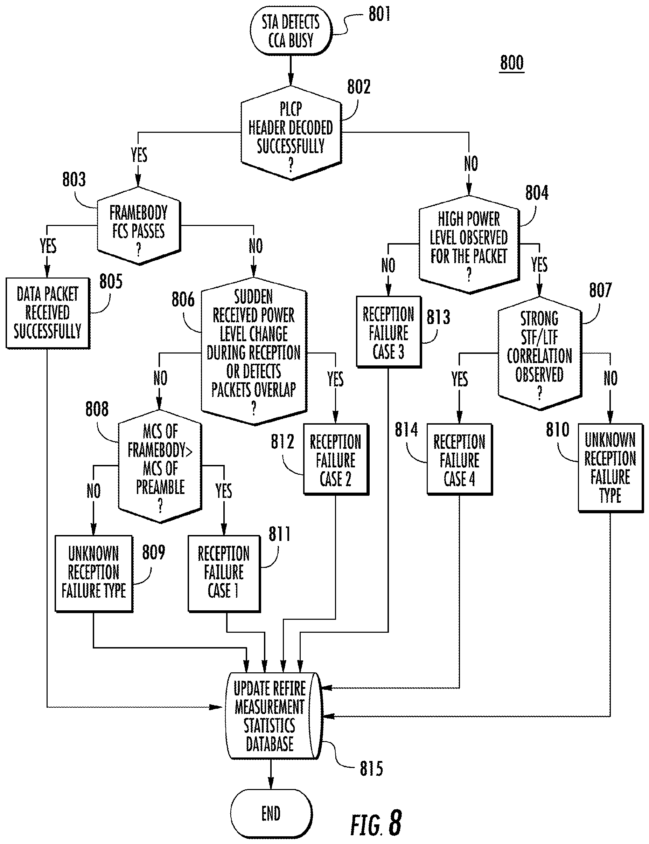

FIG. 8 provides a flow diagram of an example procedure for identifying different types of reception failure 800. According to the procedure of FIG. 8, a STA may detect a CCA that indicates that the channel is busy 801, which indicates that the energy on the channel is above a threshold and occurs when the STA is receiving a packet. The STA may then decode the PLCP header 802 and if successful may then check the frame body FCS 803. If the frame body FCS passes, then the data packet has been received successfully 805. The ReFire measurement statistics database may then be updated 815.

In another example, the STA may detect a CCA that indicates that the channel is busy 801. The STA may then decode the PLCP header 802 and if successful may then check the frame body FCS 803. If the frame body FCS fails, the STA may determine whether there was a sudden power level change during reception or whether there is any detection of packet overlap 806. If there is no sudden power level change or packet overlap, then the STA may determine whether the MCS of the frame body is higher than the one used for the PLCP header/preamble 808. If the MCS is higher than the one used for the PLCP header/preamble, then reception failure Case 1 as described herein has occurred 811. If the MCS is not higher than the one used for the PLCP header/preamble, then an unknown reception failure has occurred 809. The ReFire measurement statistics database may then be updated 815. Alternatively, if there was sudden power level change or packet overlap, then reception failure Case 2 as described herein has occurred 812, and the ReFire measurement statistics database may then be updated 815.

In another example, the STA may detect a CCA that indicates that the channel is busy 801. The STA may then decode the PLCP header 802 and if it fails, the STA may then determine whether a high power level was observed for the packet 804. If a high power level was not observed for the packet, then reception failure Case 3 as described herein has occurred 813, and the ReFire measurement statistics database may then be updated 815. If a high power level was observed for the packet, then the STA may determine whether a strong STF/LTF correlation was observed 807. If a strong STF/LTF correlation was observed for the packet, then reception failure Case 4 as described herein has occurred 814, and the ReFire measurement statistics database may then be updated 815. If a strong STF/LTF correlation was not observed for the packet, then an unknown reception failure has occurred 810, and the ReFire measurement statistics database may then be updated 815.

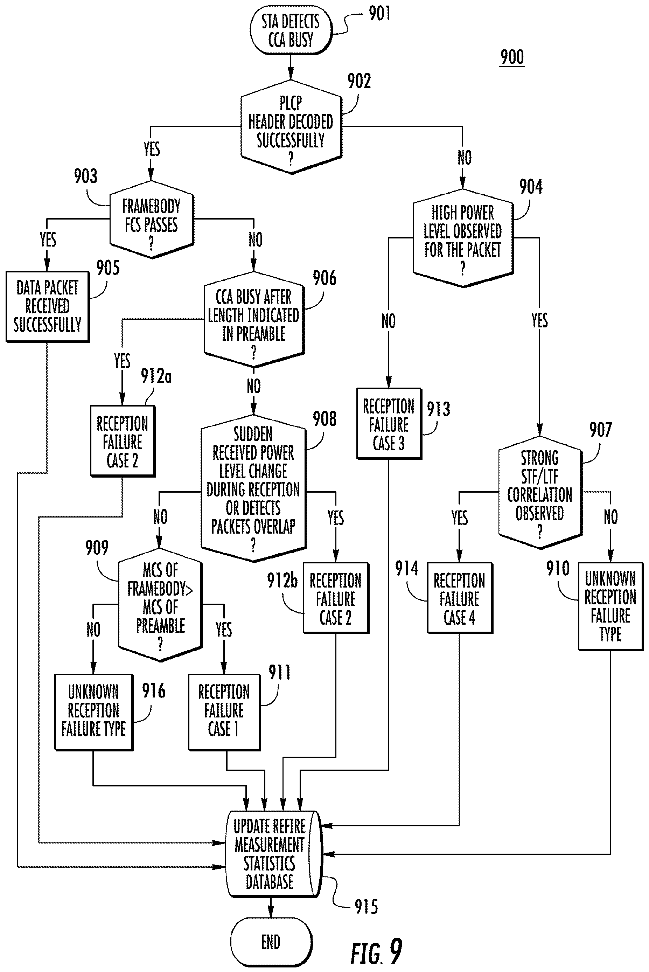

FIG. 9 provides a flow diagram of another example procedure for identifying different types of reception failure 900. The procedure detailed in FIG. 9 differs from the procedure detailed in FIG. 8 in that when a valid preamble is detected, but the FCS check of the frame failed, the receiving STA may continue to monitor the medium immediately after the length of time specified in the PLCP header has ended in order to detect whether the CCA is busy. If the CCA is busy, it is likely that a partial packet overlap has occurred and the reception failure Case 2 is identified. However, if the CCA is not busy immediately after the length of time indicated in the PLCP header, the receiving STA may review whether there was any packet overlap or sudden RF power changes have been detected during the reception. The detection methods described in detail below may be for the detection of sudden RF changes during the reception or for packet overlap. If a packet overlap or sudden RF power change has been detected, then reception failure Case 2 has been detected. Otherwise, the reception failure may be an unknown reception failure type or reception failure Case 1 depending on the MCS used for the PLCP header and for the remainder of the packet.

Referring to FIG. 9, a STA may detect a CCA that indicates that the channel is busy 901, which indicates that the energy on the channel is above a threshold and occurs when the STA is receiving a packet. The STA may then decode the PLCP header 902 and if successful may then check the frame body FCS 903. If the frame body FCS passes, then the data packet has been received successfully 905. The ReFire measurement statistics database may then be updated 915.

In another example, the STA may detect a CCA that indicates that the channel is busy 901. The STA may then decode the PLCP header 902 and if successful may then check the frame body FCS 903. If the frame body FCS fails, the STA may monitor the medium to detect a CCA that indicates that the channel is busy 906 immediately after the length of time specified in the PLCP header has ended. If the channel is busy then reception failure Case 2 as described herein has occurred 912a, and the ReFire measurement statistics database may then be updated 915. If the channel is not busy immediately after the length of time specified in the PLCP header has ended, then the STA may determine whether there was a sudden power level change during reception or whether there is any detection of packet overlap 908. If there is no sudden power level change or packet overlap, then the STA may determine whether the MCS of the frame body is higher than the one used for the PLCP header/preamble 909. If the MCS is higher than the one used for the PLCP header/preamble, then reception failure Case 1 as described herein has occurred 911. If the MCS is not higher than the one used for the PLCP header/preamble, then an unknown reception failure has occurred 916. The ReFire measurement statistics database may then be updated 915. Alternatively, if there was sudden power level change or packet overlap, then reception failure Case 2 as described herein has occurred 912b, and the ReFire measurement statistics database may then be updated 915.

In another example, the STA may detect a CCA that indicates that the channel is busy 901. The STA may then decode the PLCP header 902 and if it fails, the STA may then determine whether a high power level was observed for the packet 904. If a high power level was not observed for the packet, then reception failure Case 3 as described herein has occurred 913, and the ReFire measurement statistics database may then be updated 915. If a high power level was observed for the packet, then the STA may determine whether a strong STF/LTF correlation was observed 907. If a strong STF/LTF correlation was observed for the packet, then reception failure Case 4 as described herein has occurred 914, and the ReFire measurement statistics database may then be updated 915. If a strong STF/LTF correlation was not observed for the packet, then an unknown reception failure has occurred 910, and the ReFire measurement statistics database may then be updated 915.

Some example metrics that may be used to identify failure types are summarized in Table 1 below. However, the metrics implemented may not be limited to those listed in Table 1. In this example, it should be noted that "Packet 1" under Case 2 refers to the packet that is transmitted first whereas "Packet 2" under Case 2 refers to the packet that was transmitted second or later. In this example, both "Packet 1" and "Packet 2" are corrupted since they are partially overlapping.

Table 1: Overview of Case 1 - Case 4 of reception failures

| | Case 1 (High MCS) | Case 2 (Partially overlapping) | | Case 3 (low power and white noise like interference) | Case 4 (collision) |
|---|---|---|---|---|---|
| | | Packet 1 | Packet 2 | | |
| STF/LTF | OK | OK | Maybe | Maybe OK. Cc is better than Ca | Good Ca, more peaks with Cc |
| PLCP CRC | OK | OK | No | No | No |
| FCS | No | Maybe | No | No | No |
| RSSI | Good | Changing | Changing | Low | Good |
| Pilots | OK | Some OK | No | no | In selected cases |

Referring to Table 1, the receiver may use auto-correlation or cross-correlation to detect STF/LTF and perform timing/frequency offset correction. In reception failure Case 1 when detecting STF/LTF, the packet may be sent with an MCS that is too high and the STL/LTF may be detected normally. In reception failure Case 2 when detecting STF/LTF, two packets may be partially overlapping and the STF/LTF may be detected normally for the first packet (Packet 1) if they are not overlapped with the second packet. The second packet (i.e., Packet 2) may or may not be detected normally depending on the signal strength of the two packets. In reception failure Case 3 when detecting STF/LTF, noise like interference/noise may be present, and the receiver may observe a low power packet. Then the STF/LTF may or may not be correctly detected depending on the signal to interference and noise ratio (SINR) at the receiver side. In this case, the receiver may observe better results when it utilizes the cross correlation algorithm rather than using the auto-correlation algorithm. In reception failure Case 4 when detecting STF/LTF, the packet may collide with other packet(s). The STF/LTF then may not be correctly detected. The receiver may observe better results when the receiver utilizes the auto-correlation algorithm rather than using the cross correlation algorithm.

In another example referring to Table 1, the PLCP header may include a signaling field (SIG) that has a cyclic redundancy check (CRC). Once the receiver detects the SIG field correctly, it passes the CRC. In reception failure Case 1 when checking the PLCP/CRC, the SIG field is always coded and modulated with the lowest MCS. Thus, the receiver may pass the PLCP CRC. In reception failure Case 2 when checking the PLCP/CRC, if the SIG field of packet 1 is not overlapping with that of packet 2, the receiver may detect the SIG field of packet 1 correctly. The receiver may not detect the SIG field of packet 2. When checking the PLCP/CRC in reception failure Case 3 and reception failure Case 4, the receiver may not be able to detect the SIG field.

In another example referring to Table 1, a frame check sequence (FCS) may protect the MAC packet. If the packet is correctly decoded, it may pass the FCS. In reception failure Case 1 when passing the FCS, the MAC packet has been coded and modulated with a MCS that is too high causing the receiver to not be able to decode the packet correctly. In reception failure Case 2 when passing the FCS, the receiver may not be able to decode both packets, including Packet 1 and Packet 2, correctly. Thus, Packet 1 may have a small chance to be decoded if the signal power of Packet 1 is significantly larger than that of Packet 2. When passing the FCS in reception failure Case 3 and reception failure Case 4, the receiver may not be able to detect the packet.

In another example referring to Table 1, the receiver may observe RSSIs, especially instant RSSIs, with different behaviors for each of the four cases. For example, in reception failure Case 1, the receiver may observe a sufficiently strong RSSI level for the entire packet. The RSSI levels may remain constant or have small variations. In reception failure Case 2, the receiver may observe sudden changes in RSSI. In reception failure Case 3, the receiver may observe low RSSI levels. In reception failure Case 4, the receiver may observe good RSSI levels.

In another example referring to Table 1, pilots may be utilized for phase tracking. However, the change in pilots may be observed in order to distinguish the four cases. In reception failure Case 1, the pilots may be detected when they are Binary Phase Shift Keying (BPSK) modulated. In reception failure Case 2, the receiver may detect pilots from the OFDM symbols where they are not overlapping with the other packet(s). For example, the pilots for Packet 2 may not be detected even though some pilots are not overlapped with Packet 1 when the STF/LTF of Packet 2 are not detected successfully. In reception failure Case 3, the receiver may not be able to detect the pilots. In reception failure Case 4, it may be difficult for the receiver to detect the pilots. When the two collided packets are well synchronized, such as when they arrive at the receiver within a CP duration and are aligned in the frequency domain, the receiver may observe a constant value in the pilot subcarriers. This is also under the assumption that the channels of both transmitters observed at the receiver remain constant.

A framework may also be used for ReFIRe measurement and reporting as shown in FIG. 8 and FIG. 9. The transmitter and receiver may exchange the ReFIRe capability information, such as the capability of the receiver to measure and report for ReFIRe, and the transmitter's capability to utilize the measurement report at the transmitter. In the case where both the transmitter and receiver have the ReFIRe capability, the receiver may perform a ReFIRe measurement for every packet or perform a ReFIRe measurement for packets that contain a ReFIRe measurement indication in the PLCP header, or packets received during a Block ACK session that has been configured for ReFIRe measurement. The ReFIRe measurement (such as a RSSI or RCPI level change during packet reception or LTF/STF correlation) may be reported to the transmitter when the measurement reporting is set to TRUE and other reporting criteria (such as a failure of the FCS of the frame body) has been met.

A sudden receive power change may be a good indicator of a transmission failure due to a packet overlap or a hidden node problem. Current IEEE 802.11 devices may monitor the received power at the PHY layer and pass some indicators to the MAC layer through certain primitives. However, most of the existing receive power related measurements are defined as an average value over the entire packet, or over a long period. Alternatively, changes in the received power in the packet may be monitored, and thus an instantaneous received power measurement or a received power measurement over a short period may be obtained.

In one embodiment, Instantaneous Receive Power (IRP) measurements are defined. The IRP measurements may be defined by the following rules. The IRP may be defined as average received power over a short period, for example, one or multiple OFDM symbols durations. The IRP may be calculated with a sliding window. For example, the IRP may be an average over m OFDM symbols. The sliding window may be defined in the step of one OFDM symbol. Then, at the $m^{th}$ OFDM symbol, the first IRP may be calculated as the average receiver power over the first $m$ OFDM symbols. At the $m+k^{th}$ OFDM symbol, the $k+1^{th}$ IRP may be calculated as the average over the $k+1^{th}$ OFDM symbol to the $m+k^{th}$ OFDM symbol.

The IRP may be presented by $x$ bits, and thus the IRP value may be between 0 and $2^x$-1. The IRP may be used to calculate a reception failure indicator. Two kinds of reception failure indicators are defined in this subsection. First, a Reception Power based Failure Type Indicator (RPFTI) may be used to distinguish the types of reception failures. For example, the RPFTI may be defined as an octet value. When the RPFTI value is between 0 and T1, reception failure Case 1 is indicated. When a value falls between T1 and T2, it may indicate reception failure Case 2. Similarly, a value between T2 and T3 may indicate reception failure Case 3, and a value within T3 and T4 may indicate reception failure Case 4. Value 0 may be used to indicate that the receiver does not have enough information to distinguish between Cases 1-4. In another example, the RPFTI may be defined as a hard-decision, e.g., a value between 0 and 3, wherein a RPFTI value $k$ may indicate reception failure $k+1$. An extra value, e.g., 4, may be used to indicate that the receiver is unable to identify the type of reception failure.

A second indicator may be a Reception Power based Reliability Indicator (RPRI). This indicator may be used to indicate how reliable the corrupted received signal is. For example, an RPRI may be defined as an octet value wherein a low number may represent a received signal from a corrupted packet that is very unreliable, and a higher octet value may represent a received signal that is considered reliable. A zero value may be used to indicate that the receiver cannot give a meaningful RPRI.

Multiple methods that may be used to derive an RPFTI and RPRI from an IRP are described herein. A first method comprises post-IRP processing and may include but is not limited to the following steps:

(1) Once the PHY layer receives a CCA busy indication, it may begin normal packet detection and save the received signal in a buffer.
(2) If the PHY layer detects a valid PLCP header (reception failure Case 1 and reception failure Case 2), it may go to steps 3 to 6; otherwise ( reception failure Case 3 and reception failure Case 4), it may go to steps 7 to 9.
(3) The PHY layer may pass the decoded bits to the MAC layer, and the MAC layer may perform an FCS check. If the FCS passes, it may clear the buffer and stop.
(4) If the FCS fails, the MAC layer may pass a primitive to the PHY layer indicating the reception failure.
(5) When the PHY layer receives the reception failure primitive, the PHY layer may check the buffered received signal again, and may calculate the IRPs.
(6) The PHY layer may calculate an RPFTI and RPRI from the IRP according to certain implemented algorithms. Below are possible exemplary algorithms:

(a) It may be defined that $Diff\_IRP_{k+1}$-$IRP_k$. If all of the $Diff\_IRP$ values are within certain range, then reception failure Case 1 is possible and the RPFTI may be set to indicate reception failure Case 1. In this scenario, a relatively high RPRI value may be set to indicate that the corrupted packet is sufficiently reliable, and it may be utilized to perform a HARQ combine later. If at least one of the $Diff\_IRP$ values, e.g., $Diff\_IRPm,$ is greater than a certain threshold, a sudden receive power change may be observed, and reception failure Case 2 may be possible. Thus the RPFTI value may be set to indicate reception failure Case 2. In this scenario, depending on the ratio of $m/N$, where $m$ is the index where a sudden power change is observed, and $N$ is the total number of IRPs, an RPRI value may be defined. For example, a relatively high RPRI value may be set when $m/N$ is close to 1, and a relatively low RPRI value may be set when $m/N$ is close to 0.
(b) The variation in IRPs may be calculated and defined as $Var\_IRP$. If $Var\_IRP$ is within a certain range, then reception failure Case 1 is possible, and the RPFTI may be set to indicate reception failure Case 1. In this scenario, a relatively high RPRI value may be set to indicate that the corrupted packet is sufficiently reliable and may be used to perform a HARQ combine later. If $Var\_IRP$ is greater than a certain threshold, a sudden receive power change may be observed, and reception failure Case 2 may be possible. The RPFTI may be defined accordingly, and a relatively low RPRI value may be set.

(c) The RPFTI and RPRI may be defined based on $Diff\_IRP$ and $var\_IRP$ together.

(7) If no valid PLCP header is detected, the RPRI value may be set to a low number.

(8) The PHY layer may check the buffered received signal during PLCP header detection and calculate IRPs.

(9) If the IRP values are higher in STF/LTF OFDM symbols but are relatively lower in the SIG field, a collision may have occurred. Thus, the RPFTI may be set to indicate reception failure Case 4. Otherwise, the RPFTI may be set to indicate reception failure Case 3.

A second method involves concurrent IRP processing and includes but is not limited to the following steps:

(1) Once the PHY layer receives a CCA busy indication, it may begin normal packet detection. At the same time that it calculates the IRP values, other parameters may be derived from the IRP. For example $Diff\_IRPs$ and $Var\_IRP$ may be derived from the IRP. $Var\_IRP_2$ may be calculated based on $IRP_1$ to $IRP_2$. Once $IRP_{k+1}$ is available, $Var\_IRP_{k+1}$ may be updated according to $Var\_IRP_k$ and $IRP_{k+1}$.

(2) If the PHY layer detects a valid PLCP header (Cases 1 and 2), the method may proceed to steps 3-6. Otherwise (reception failure Case 3 and Case 4), it may proceed to steps 7 to 9.

(3) The PHY may pass the decoded bits to the MAC layer, and the MAC may perform an FCS check. If the FCS passes, it may clear the buffer and stop.

(4) If the FCS fails, the MAC layer may pass a primitive to the PHY layer indicating the reception failure.

(5) When PHY layer receives the reception failure primitive, the PHY layer may check the IRPs and their derived parameters.

(6) The PHY layer may calculate the RPFTI and RPRI from the IRP according to a certain implemented algorithm, such as the example algorithms provided above.

(7) If no valid PLCP header is detected, the receiver may stop the decoding process. The RPRI value may be set to a low number.

(8) The PHY layer may check the IRPs and their derived parameters.

(9) If the IRP values are higher in the STF/LTF OFDM symbols but are relatively lower in the SIG field, a collision may have occurred. Thus, the RPFTI may be set to indicate reception failure Case 4. Otherwise, the RPFTI may be set to indicate reception failure Case 3.

When either the first method or the second method described above is being used, the RPFTI and RPRI may be calculated in the PHY layer. The PHY layer may then report them to the MAC layer through a primitive when the RPFTI and RPRI have meaningful values. Alternatively, the PHY layer may report the IRP or/and IRP derived parameters to the MAC layer, and the MAC layer may derive the RPFTI and RPRI. The methods used to calculate the RPFTI and RPRI in the MAC layer may utilize other available information, including but not limited to a TXOP reservation, NAV setting, or the like.

Channel coding may be used in a WiFi system, AP, and STAs to correct errors and provide more reliable communications. For example, in IEEE 802.11ac channel coding, use of a binary convolutional (BC) code (BCC) is a mandatory capability, and use of a low-density parity check code (LDPC) for channel coding is optional.

In accordance with one embodiment, use of an LDPC code may also be implemented. In this embodiment the behavior of the decoder during the decoding of a frame may be used as an indicator of the channel and packet state condition. A decoder reliability metric (DRM) may be calculated at the receiver (e.g. a STA) and may be used in a procedure to indicate how reliable the decoded bits are prior to determining if the decoded bits have passed a CRC check. In the event that a CRC failure occurs, an AP and/or STA may utilize this metric to help to determine what type of reception failure caused the CRC failure. This information may also be used in a procedure to apply a remediation scheme that may be dependent on the type of failure that occurred (e.g., due to collision versus interference).

If a BCC is used, a Viterbi decoder may calculate a branch metric, $BC_{ij}$, for the $j^{th}$ branch of the $i^{th}$ path through the trellis. Either soft-decision decoding, or hard-decision decoding may be used with the BCC, where the branch metric may use the Hamming distance or the Euclidean distance respectively between the received bits and desired output on the branch. A metric of the $i^{th}$ path, $PM_i$ is then calculated as the summation of $BC_{ij}$ through the trellis. At each stage, there may be more than one path entering to the same node, and only the path with the best PM value remains. This path is called the survival path.

With LDPC, an iterative belief propagation algorithm may be applied at the receiver. Due to the nature of parity check codes, the codeword c may be encoded such that $Hc=0$, where $H$ is a parity check matrix. The parity check matrix H may be expressed by a bipartite graph, which is comprised of a set of check notes, and a set of bit notes. The relationship between check nodes and bits notes may be represented by the matrix H. Initially, the log likelihood ratios (LLRs) from the demodulator may be passed to the bit notes. After each iteration, the LLRs may be updated. The decoder may terminate when the output meets the parity check requirements, or the decoder converges, or the maximum number of iterations is achieved.

The DRM may be calculated using the following procedure, where a receiver and transmitter may be either an AP or a STA. A receiver (e.g., a STA) may calculate the DRM based on the metrics that it acquired during the process of decoding as noted in the previous paragraph. The receiver may use an arbitrary algorithm to calculate a DRM value, or a set of DRM values. For example, a DRM may be defined as an octet value wherein a zero or low number may represent a decoded codeword from a corrupted packet that is very unreliable, and a higher octet value may represent a decoded codeword that is considered reliable (e.g., at the STA).

The DRM metric may be used either prior to the computation of a CRC checksum, or as additional information in the event of a CRC checksum failure. A transmitter (e.g., an AP) may use a procedure wherein a DRM metric that has been fed back from the receiver is used to facilitate the decoding process (e.g., at the AP). For example, the metric may be PM values at the final stage when BCC is utilized, or the number of iterations when LDPC is utilized. The transmitter may calculate a local_DRM value using the feedback.

For both the BCC and LDPC, it may be possible that more than one codeword is used for a single packet transmission/reception. Examples of DRM algorithms and associated procedures for different scenarios follow. One codeword may be used per packet. With BCC, the DRM may be defined as the probability of each survival path at the final stage. When determining the survival path, more than one PM value may be compared. The difference between the PM values may be collected, and certain statistics, such as mean and variance, may be used to derive DRM value. For LDPC, statistics of LLR values from the final iterations may be used and may be combined with the number of iterations.

Alternatively, multiple codewords per packet may be used. In this case, the MAC header may be within the first or first several codewords. If the MAC header is decoded and the receiving MAC address matches the receiver's MAC address, the receiver may intend to save the received packet for future use. If the MAC header is not decoded reliably or the decoded receiving MAC address does not match the receiver's MAC address, the receiver may intend to discard the received packet. The DRM may be calculated using the methods mentioned above for one codeword per packet. However, the first or the first several codewords that contain the MAC header may play a more important role in the DRM calculation.

Reception failure may be identified with a ReFIRe Score. The ReFIRe score may be a soft version of reception failure identification. Each factor may score from 0 to 1. The ReFIRe score may be the weighted combination of all of the factors. For example, if the CRC of the SIG passes, STF/LTF=1 and SIG=1. Otherwise, SIG=0, and the STF/LTF score may be between 0 and 1 depending on cross/auto correlation.

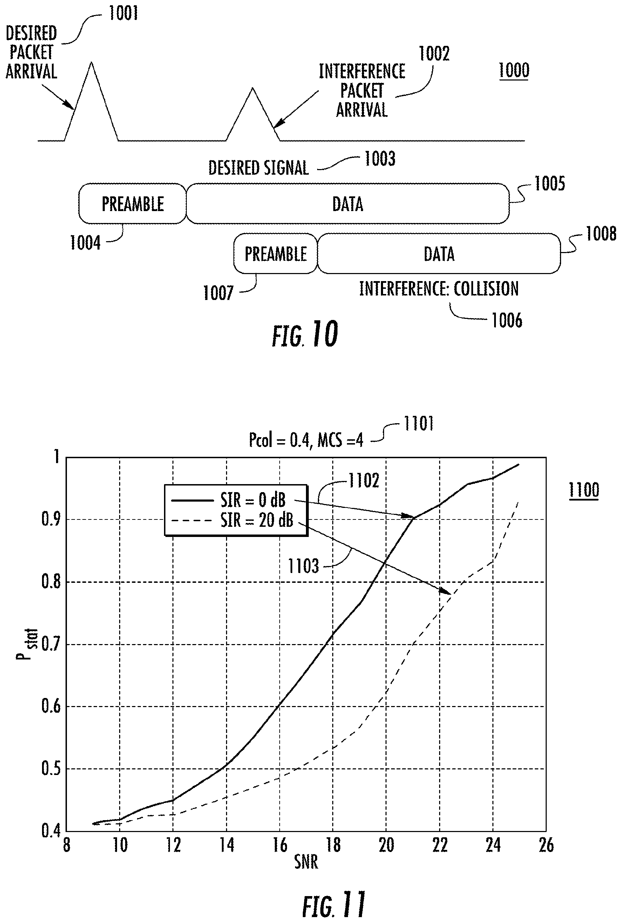

FIG. 10 is a figure illustrating an embodiment that uses packet arrival detection methods 1000 to identify collisions during the reception of a packet. The IEEE 802.11 preamble is made up of the STF and LTF, and a packet arrival detection block is typically used to identify the arrival of a new packet. In the event of a collision of sufficient power, the packet arrival detection mechanism may be able to identify the arrival of the colliding packet based on its preamble (STF and LTF). In the example of FIG. 10, the desired signal 1003 includes a preamble 1004 and data 1005. Accordingly, the desired packet arrival 1001 may be detected. Similarly, the interference signal 1006 includes a preamble 1007 and data 1008, and the interference packet arrival 1002 may also be detected. Thus, applying a packet arrival detection block to the entire received packet may allow detection of a collision in the case of a packet reception failure.

The effectiveness of the method may depend on the relative energy of the colliding packet with the desired packet. The process may be implemented by one of the following methods. For the conditional implementation method, the arrival of the received packet may be identified, and a decoding process may be performed on the received packet. If the packet decoding fails, a packet arrival detection block may be run on the received packet. If the correlation value of the packet detection block exceeds a threshold, this may indicate the presence of a colliding packet. If the correlation value of the packet detection block is less than a threshold, this may indicate the absence of a colliding packet. The threshold may be the same or different from the threshold used to identify the desired packet.

For the mandatory implementation method, the arrival of the received packet may be identified. A packet arrival detection block may be run on the entire received packet. If the correlation value of the packet detection block exceeds a threshold, it may indicate the presence of a colliding packet. If the correlation value of the packet detection block is less than a threshold, it may indicate the absence of a colliding packet. The threshold may be the same or different from the threshold used to identify the desired packet. The packet detection block may run as a separate block. A decoding process may be performed on the received packet. If the packet decoding fails, information from the packet arrival detection block may be checked to determine whether a collision has occurred.

The following embodiment presents a method for inter-layer reception failure indication. The Physical Medium Dependent (PMD) layer and the PLCP layer may use several primitives to indicate potential reception failures. Similarly, the PLCP or PHY layer and the MAC layer may use several primitives to indicate potential reception failure. These primitives include: PMD_PowerChange.indication primitive, PMD_NewPacketDetected.indication primitive, PHY-Power-

Change.indication primitive, PMD_PowerChangeDetected.request primitive, PHY-PowerChangeDetected.request primitive, PHY-RXChangeDetected.request primitive, PHY-RXChangeDetected.indication primitive, PHY-DATA indication primitive, and PHY-RXEND.indication primitive, which may be defined or modified as discussed below.

The PMD_PowerChange.indication is generated by the PMD and may provide an indication of power level changes during the reception of a packet to the PLCP and MAC. This primitive may provide the following parameter: PMD_PowerChange.indication(PowerChange,Time). PowerChange may be a measure of change in power levels during the reception of a packet. For example, PowerChange may be implemented as an integer, with positive integers indicating increase in power levels, and negative integers indicating decrease in power levels. In an alternative example, Power-Change may be implemented as an indicator with one value, for example, "0" indicating no power level change, and "1" indicating detected power level change that is larger than some threshold value. In yet another example, PowerChange may be implemented with three values, "no power level change", "decrease in power level", "increase in power level". In yet another example, PMD_PowerChange.indication may provide any power-related parameters as described above, such as IRP, Diff_IRP, Var_IRP, etc. One skilled in the art would appreciate that other variations for implementing PowerChange are also possible.

The PMD_PowerChange.indication primitive may be generated regularly, for example, every N OFDM symbols, where N is equal or larger than 1, or at regular time interval. The PMD_PowerChange.indication primitive may be generated when the power level change exceeds some pre-defined threshold, for example, 5 dB. In another example, the PMD_PowerChange.indication primitive may be generated at the end of the last received OFDM symbol with the PowerChange indicating a power level change during the reception of a packet, and Time indicating the time when the power level change occurred. In this example, the PMD_PowerChange.indication primitive may provide multiple sets of (PowerChange, Time), with each set associated with one power level change detected, which may exceed some pre-defined threshold. In yet another example, the PMD_PowerChange.indication may be generated when the PMD has received a PMD PowerChangeDetected.request from the PLCP.

The PMD_NewPacketDetected.indication primitive is generated by the PMD, and may provide an indication of the detection of the arrival of a new packet, for example, as described previously above, during the reception of the current packet to the PLCP and MAC entity. The PMD_NewPacketDetected.indication primitive may provide the following parameter: PMD_NewPacketDetected.indication(NewPacketDetected, Time). NewPacketDetected may be an indication of the detection of the arrival of an additional packet. For example, a value of "0" may indicate that no additional packet has been detected while a value of "1" may indicate that an additional packet has been detected. The parameter Time may be an indication of when the detection of the arrival of the additional packet occurred. The parameter Time may be implemented as the OFDM symbol number starting at the preamble, or the OFDM symbol number starting at the end of the preamble, or the time in nanoseconds or microseconds (or any other time units) starting at the begin of the preamble or at the end of the preamble.

The PMD_NewPacketDetected.indication primitive may be generated regularly, for example, every N OFDM symbols, where N is equal or larger than 1 or at regular time interval. Alternatively, the PMD_NewPacketDetected.indication primitive may be generated only when the PMD detects the arrival of a new packet during the reception of another packet. In another example, the PMD_NewPacketDetected.indication primitive may be generated at the end of the last received OFDM symbol with Time indicating the time when the detection of the arrival of the additional packet occurred. In that case, the PMD_NewPacketDetected.indication primitive may provide a multiple of the parameter Time, with each one associated with a detection of the arrival of an additional packet.

The PHY-PowerChange.indication primitive is generated by the PLCP or the PHY entity, and may provide indication of power level changes during the reception of a packet to the MAC entity. This primitive may provide the following parameter: PHY-PowerChange.indication(PowerChange, Time). PowerChange may be a measure of change in power levels during the reception of a packet. For example, PowerChange may be implemented as an integer, with positive integers indicating increase in power levels, and negative integers indicating decrease in power levels. In an alternative example, PowerChange may be implemented as an indicator with one value, for example, "0" indicating no power level change, and "1" indicating detected power level change that is larger than some threshold value. In yet another example, PowerChange may be implemented with three values, "no power level change", "decrease in power level", and "increase in power level". The parameter Time may be an indication of when the power level change occurred. The parameter Time may be implemented as the OFDM symbol number starting at the preamble, or OFDM symbol number starting at the end of the preamble, or time in nanosecond, or microseconds or any other time units starting at the beginning of the preamble or at the end of the preamble. In yet another example, PHY-PowerChange.indication may provide any power-related parameters as previously described above, such as IRP, Diff_IRP, Var_IRP, etc.

The PHY-PowerChange.indication primitive may be generated regularly during the reception of a packet, for example, every N OFDM symbols, where N is equal or larger than 1 or at regular time interval. Alternatively, the PHY-PowerChange.indication primitive may be generated only when the power level change exceeds some pre-defined threshold, for example, 5 dB. In another example, The PHY-PowerChange.indication primitive may be generated at the end of the last received OFDM symbol with the PowerChange indicating the power level change during the reception of a packet, and Time indicating the time when the power level change occurred. In that case, the PHY-PowerChange.indication primitive may provide multiple sets of (PowerChange, Time), with each set associated with one power level change detected, which may exceed some pre-defined threshold. In yet another example, the PHY-PowerChange.indication may be generated when the PLCP has received a PHY-PowerChangeDetected.request from the MAC entity.

The PMD_PowerChangeDetected.request primitive is generated by the PLCP, and may request the PMD to provide information on detected power level changes, for example, during the previous or the coming receptions. This primitive may provide the following parameter: PMD_PowerChangeDetected.request(PowerChangeThreshold,RequestMode). PowerChangeThreshold may be a threshold in power level changes during the reception of a packet. If a power level change has exceeded the threshold, the PMD layer may report the detected power level change. For example, PowerChangeThreshold may be implemented as an integer. The parameter RequestMode may have the value "For Previous Packet" or "General".

The PMD_PowerChangeDetected.request primitive may be generated immediately after the completion of a reception, at any time, or when the PLCP has received a PHY-PowerChangeDetected.request primitive from the MAC entity. When the PMD receives a PMD_PowerChangeDetected.request primitive from the PLCP with the RequestMode "For Previous Packet", it may generate a PMD_PowerChange.indication with detected power level changes that exceed the specified PowerChangeThreshold. When the PMD receives a PMD_PowerChangeDetected.request primitive from the PLCP with the RequestMode "General", it may set the local parameter PowerChangeThreshold to the parameter included in the primitive. It may then generate a PMD_PowerChange.indication when, during a reception, it detects a change in power level that exceeds the local parameter PowerChangeThreshold.

The PHY-PowerChangeDetected.request primitive is generated by the MAC entity and may request that the PHY entity provide information on detected power level changes. For example, during the previous or the coming receptions, it may request that the PHY entity provide information on detected power level changes. The PHY-PowerChangeDetected.request primitive may provide the following parameter: PHY-PowerChangeDetected.request(PowerChangeThreshold, RequestMode). PowerChangeThreshold may be a threshold in power level changes during the reception of a packet. If a power level change has exceeded the threshold, the PLCP layer may report the detected power level change. For example, PowerChangeThreshold may be implemented as an integer. The parameter RequestMode may have the value "For Previous Packet" or "General".

The PHY-PowerChangeDetected.request primitive may be generated immediately after the completion of a reception or at any time. When the PLCP receives a PHY-PowerChangeDetected.request primitive from the MAC entity with the RequestMode "For Previous Packet", it may generate a PHY-PowerChange.indication with detected power level changes that exceed the specified PowerChangeThreshold. In another example, the PLCP may generate a PMD_PowerChangeDetected.request, and when it has received the primitive PMD_PowerChangeDetected.indication from the PMD, it may generate a PHY-PowerChange.indication with the parameter obtained from the PMD_PowerChangeDetected.indication primitive.

When the PLCP or PHY entity receives a PHY-PowerChangeDetected.request primitive from the MAC entity with the RequestMode "General", it may set the local parameter PowerChangeThreshold to the parameter included in the primitive and may generate a PHY-PowerChange.indication when during a reception it has detected a change in power level that exceeds the local parameter PowerChangeThreshold. In another example, when the PLCP or PHY entity receives a PHY-PowerChangeDetected.request primitive from the MAC with the RequestMode "General", it may generate a primitive PMD_PowerChangeDetected.request with the same parameters obtained from the PHY-PowerChangeDetected.request primitive.

In yet another example, the PowerChangeThreshold parameter may be part of the PHYCONFIG_Vector, and the PHY entity may be configured by the MAC entity by generating the PHY-CONFIG.request primitive to the local PHY entity.

The PHY-RXChangeDetected.request is generated by the MAC entity and may request the PHY entity to provide information on detected changes, for example, during the previous or the coming receptions. This primitive may provide the following parameter: PHY-RXChangeDetected.request(RequestedParameters, PowerChangeThreshold, RequestMode).

RequestedParameters may be the set of parameters of changes detected that the MAC entity requests the PHY entity to provide, if any changes are detected. RequestedParameters may include one or more of the following: "PowerLevelChangeDetected", "DecodingUnreliabilityDetected", "NewPacketDetected".

PowerChangeThreshold may be a threshold in power level changes during the reception of a packet. If a power level change has exceeded the threshold, the PHY layer may report the detected power level change. For example, PowerChangeThreshold may be implemented as an integer. The parameter RequestMode may have the value "For Previous Packet" or "General".

The PHY-RXChangeDetected.request primitive may be generated immediately after the completion of a reception or at any time.

When the PHY layer receives a PHY-RXChangeDetected.request primitive from the MAC entity with the RequestMode "For Previous Packet", it may generate a PHY-RXChangeDetected.indication with the indication of detected power level changes that exceeds the specified PowerChangeThreshold, detected decoding unreliability, and detected arrival of additional packet(s) during the reception of the previous PPDU.

When the PHY receives a PHY-RXChangeDetected.request primitive from the MAC entity with the RequestMode "General", it may set the local parameter PowerChangeThreshold to the parameter included in the primitive and may generate a PHY-RXChange.indication when it has detected during a reception a change in power level that exceeds the local parameter PowerChangeThreshold, and/or when it has detected decoding unreliability, and/or when it has detected arrivals of additional packets during the reception of another PPDU.

The PHY-RXChangeDetected.indication primitive is generated by the PHY entity and may provide information on detected changes to the MAC entity, for example, during the reception of the previous PPDU. This primitive may provide the following parameter: PHY-RXChangeDetected.indication(DetectedEvent1, Time1, ...., DetectedEventN, TimeN).

DetectedEvent$i$ may be the changes detected by the PHY entity during the reception of a PPDU. DetectedEvent$i$ may have one of the following values: "PowerLevelChangeDetected", "DecodingUnreliabilityDetected", "NewPacketDetected". Time$i$ may be the time at which the DetectedEvent$i$ occurred.

The PHY-RXChangeDetected.indication primitive may be generated immediately after the completion of a reception or at any time. Alternatively, the PHY-RXChangeDetected.indication primitive may be generated when the PHY has received a PHY-RXChangeDetected.request primitive from the MAC entity.

The PHY-DATA.indication primitive may be modified as described herein. The PHY-DATA.indication primitive may define the transfer of some unit of data from the PHY to the local MAC entity as well as provide an indication of detection of any power level change, decoding unreliability and arrival of new packet during the reception of the current packet. The PHY-DATA.indication primitive may provide the following parameters: PHY_DATA.indication(DATA, STATUS). STATUS may have one or more of the following values: "NoError", "Power Level Change Detected", "DecodingUnreliabilityDetected", "NewPacketDetected".

In another example, the PHY-DATA.indication primitive may provide the following parameters: PHY-DATA.indication(DATA, PowerLevelChangeDetected, DecodingUnreliabilityDetected, NewPacketDetected).

The PHY-DATA.indication primitive is generated by a receiving PHY entity that transfers the received units of data to the local MAC entity. The time between receipt of the last bit of the provided octet from the wireless medium (WM) and the receipt of this primitive by the MAC entity is the sum of aRXRFDelay + aRxPLCPDelay. If a change in power level has been detected that is larger than some threshold value, as discussed above, the PHY layer may set the parameter STATUS for this primitive to "PowerLevelChangeDetected" or to the actual value of power level change, or may set the parameter PowerLevelChangeDetected to "1".

If a decoding unreliability has been detected, as described above, the PHY layer may set the parameter STATUS for this primitive to "DecodingUnreliabilityDetected" or may set the parameter "DecodingUnreliabilityDetected" to "1". If the arrival of an additional packet during the reception of the current packet has been detected, as described above, the PHY layer may set the parameter STATUS for this primitive to "NewPacketDetected" or may set the parameter "NewPacketDetected" to "1".

The PHY-RXEND.indication primitive may be modified as described herein. The PHY-RXEND.indication primitive is an indication by the PHY to the local MAC entity that the PSDU currently being received is complete. This primitive may provide the following parameters: PHY-RXEND.indication(RXERROR, RXVECTOR).

In addition to the existing values, the RXERROR may have one or more of the following values: "PowerChangeDetected", "DecodingUnreliabilityDetected", and "NewPacketDetected". Similarly, RXVECTOR may contain one or more of the parameters DetectedEvent$i$ and Time$i$, where DetectedEvent$i$ may have the value "PowerChangeDetected", "DecodingUnreliabilityDetected," and "NewPacketDetected." Time$i$ may be the time of detection of DetectedEvent$i$.

In another example, the parameters "PowerChangeDetected", "DecodingUnreliabilityDetected", "NewPacketDetected", "DetectedEventi" and "Timei' may be explicit parameters for the primitive PHY-RXEND.indication.

If a change in power level has been detected that is larger than some threshold value during the reception of the PPDU, for example, as described above, the PHY layer may set for this primitive the parameter RXERROR to "PowerLevelChangeDetected" or to the actual value of power level change. Alternatively, it may set the parameter PowerLevelChangeDetected to "1" or similarly set "DetectEventi' to "PowerLevelChangeDetected" and Timei to the time of detection.

If a decoding unreliability has been detected, for example, as described above, the PHY layer may set the parameter RXERROR for this primitive to "DecodingUnreliabilityDetected", or may set the parameter "DecodingUnreliabilityDetected" to "1" or similarly may set "DetectEvent$i$' to "DecodingUnreliabilityDetected" and Time$i$ to the time of detection. If the arrival of an additional packet during the reception of the PPDU has been detected, for example, as described above, the PHY layer may set for this primitive the parameter RXERROR to "NewPacketDetected." Alternatively, it may set the parameter "NewPacketDetected" to "1" or similarly set "DetectEvent$i$' to "NewPacketDetected" and Time$i$ to the time of detection.

Referring back to FIG. 9, there are various decision processes shown for various reception failure identification cases. For example, if during any part of the reception process, a PHY-RXEND.indication primitive has been generated by the PHY entity with the RXERROR set to the value "CarrierLost", the reception failure may be identified as reception failure Case 3. In another example, if the FCS check for a received PPDU has failed, and during any part of the reception process, a PMD or PHY primitive has been generated by the PHY entity with the indication of "PowerChange", "DecodingUnreliabilityDetected" or "NewPacketDetected", the reception failure may be identified as reception failure Case 2.

Alternatively or additionally, if the FCS check for a received PPDU has failed, and a PHY-CCA.indication(busy) primitive was issued immediately after or at the same time with the PHY-RXEND.indication, the reception failure may be identified as reception failure Case 2.

Alternatively or additionally, all parameters and indications may be included as a part of the RXVector.

The following embodiment presents a method to estimate the conditional collision probability given that there has been a packet loss. The conditional collision probability may be estimated using the Bayes rule and may be dependent on the SIR, the SNR, and the collision probability, where

$$\text{prob(col|loss)} = \frac{\text{Prob(loss|col)} \cdot \text{Prob(col)}}{\text{Prob(loss)}} . \qquad \text{(Equation 1)}$$

While Prob(loss) and Prob(col) may be estimated by any of the methods discussed earlier, Prob(loss|col) may be estimated analytically assuming that the collision energy is Gaussian.

A wireless LAN system will be assumed with multiple hidden nodes that may be causing collisions. The received signal may be modeled as

$$y = h\ x + b\ I + n \qquad \text{(Equation 2)}$$

where $y$ is the received signal, $h$ is the channel of the desired signal, $b$ is a Bernoulli process with probability $p$ that there is a collision event and probability $(1-p)$ that there is none, $I$ is the deterministic interference, and $n$ is the additive white Gaussian interference and noise. In the event of a collision event with probability $(p)$, a Gaussian interference and noise power is assumed with

$$y - hx = I + n \sim N(0, \sigma^2 + |I|^2). \qquad \text{(Equation 3)}$$

If the effect of the interference is assumed to be Gaussian, $Prob(loss|col)$ is equal to $Prob(loss)$ where impairment is $N(0, \sigma^2 + |I|^2)$.

For a fixed SIR, as the SNR increases and the noise level reduces, pstat tends towards 1 as any error is the result of a collision. However, as the SIR increases, pstat may decrease due to the capture effect wherein a packet may be decodable in the presence of a collision due to the low collision power.

FIG. 11 illustrates an example 1100 in which the SIR increases leading to a decrease in pstat due to the capture effect wherein a packet may be decodable in the presence of a collision due to low collision power. Referring to FIG. 11, pstat is shown for SIR = 0 dB 1102 and 20 dB 1103, P = 0.4 and MCS = 4 1101. A link level simulator was used to generate the simulation results shown in FIG. 11, using the following assumptions. Three different MCSs are used (with a binary convolutional code). The largest MCS considered is MCS 4 (16-QAM modulation with rate 3/4 convolutional code). A single transmit antenna and single receive antenna are used (generalization to the multi-antenna/multi-user case is straightforward). For the channel model, an IEEE 802.11 channel type D is used for the desired user. An additive white Gaussian noise (AWGN) channel is used for the interferer. The channels are uncorrelated between new packet transmissions but the channel for a specific packet is correlated between retries. Retries randomly occur between 1 and 8 time slots after the each failed transmission. The current results assume perfect channel estimation.

Impairment 1 includes AWGN noise. Impairment 2 includes impulse interference that occurs with a probability Pc. Interference is added in the time domain at the receiver. The interference channel is assumed to be AWGN. The interference arrival is offset to ensure that no collision occurs in the preamble and MAC header. As such, the receiver may perform channel and noise estimation.

Note that in scenarios in which the interferer collides with the pre-amble/MAC header, the STA may have no idea that there is a packet and so may not do any processing. This may require that the MAC header be encoded separately from the data. The known interference statistics may include a collision probability (Pc), a conditional collision probability given the packet loss (Pc | PL), and collision/interference energy: $\|I\|2 =>$ may need to use a pilot to perform collision interference estimation. For example, the IEEE 802.11 pilots may be used to estimate the collision/interference energy.

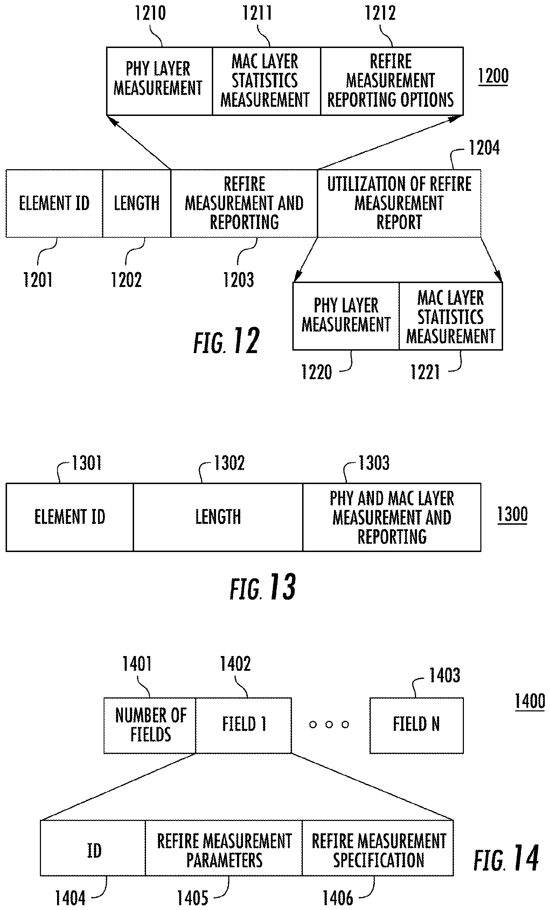

APs and STAs may indicate their capability of performing ReFIRe measurement and reporting as well as capabilities of utilizing the ReFIRe measurement report. FIG. 12 shows a diagram of an example ReFIRe Measurement Reporting and Utilization Capability IE 1200 that APs and STAs, including relay STAs, PCPs, etc., may use to indicate their capability. The ReFIRe Measurement Reporting and Utilization Capability IE may include fields including but not limited to the following: an element ID field 1201, a length field 1202, a ReFIRe Measurement and Reporting Capability field 1203, and a Utilization of ReFire Measurement Report 1204. Utilization of ReFire Measurement Report 1204 may include a PHY layer measurement 1220 and a MAC layer statistics measurement 1221, for example.

Element ID field 1201 may include an ID indicating that the current IE is a ReFIRe Measurement Reporting and Utilization Capability IE. The length field 1202 may contain the length of the ReFIRe Measurement Reporting and Utilization Capability IE. The ReFIRe Measurement and Reporting Capability field 1203 may be used to indicate the capability of the ReFIRe measurement and reporting and may contain the following subfields: a PHY layer measurement and reporting subfield 1210, MAC layer statistics measurement and reporting subfield 1211, and a ReFIRe measurement reporting options field 1212.

The PHY layer measurement and reporting subfield 1210 may be used to indicate the capability of performing a PHY layer ReFIRe measurement and reporting it when the reporting criteria are met. This field may include a bit map or other type of encoding to indicate that the STA is capable of measuring and reporting the following parameters: instantaneous measurement of the RSSI/RCPI level change during the reception of the received packet and report only if the RSSI/RCPI level change is greater than a predefined threshold; cross-correlation or auto-correlation of the STF and LTF or additional packet arrival detection based on STF/LTF as defined above; ReFIRe Score, as defined above; and a DRM, as defined above.

The MAC layer statistics measurement and reporting subfield 1211 may be used to indicate the capability of performing a MAC layer ReFIRe measurement and reporting it when the reporting criteria are met. This field may include a bit map or other type of encoding to indicate that the STA is capable of measuring and reporting the following parameters: a total number of receptions (as intended and unintended receiver); idle/busy periods (at both TX/RX); a number of retries; statistics of the reception failure Cases 1-4; statistics on unknown reception failure for all cases which cannot be differentiated; MCS feedback; a probability of reception failure; a probability of a collision (reception failure Case 2/reception failure Case 4/reception failure Case 2 + 4); a conditional probability of collision given that a reception failure is identified, as defined above.

A ReFIRe measurement reporting options subfield 1212 may indicate the options for the STA to report the measurement to other STAs or APs. These options may include scheduled reporting, reporting when a change is detected, and piggybacking a measurement report to another feedback (such as NACK signal). The ReFIRe Measurement Reporting and Utilization Capability IE or any subset of the subfields thereof may be implemented as a subfield or subsets of subfields of any existing or new IE, or as part of any control, management, extension, NDP or other type of frame, or in MAC/PLCP headers.

If a STA is capable of detecting the nature of a reception failure, it may set the parameter dot11ReceptionFailureDetection to TRUE to indicate that it has implemented reception failure detection. Alternatively, the implementation of reception failure detection may be indicated as part of a larger set of capabilities, such as parameter dot11Extended-Measurement, or dot11HECapable.

A STA may include the ReFIRe Measurement Reporting and Utilization Capability IE in its Probe Request, Association Request, or other type of frame to specify its own capability of ReFIRe measurement and reporting as well as capabilities of utilizing the ReFIRe measurement report. This may also be implied through a capability, or STA class type, indication to the AP.

An AP, relay STA, RAP or PCP may include the ReFIRe Measurement Reporting and Utilization Capability IE in its Beacon, Short beacon, Probe Response, Association Response or other type of frames to announce its own capability of ReFIRe measurement and reporting as well as capabilities of utilizing the ReFIRe measurement report.

FIG. 13 is a diagram of an example ReFIRe measurement reporting request 1300 that may be used by an AP, relay STA, RAP, or PCP to request one or more STAs to conduct ReFIRe measurement and reporting. For example a STA may use a frame that contains the ReFIRe measurement reporting request element to request a group of STAs identified by a Group ID that indicated that they are capable of ReFIRe Measurement reporting to conduct ReFIRe measurement and reporting. The ReFIRe Measurement Reporting Request element 1300 may include but is not limited to the following fields: an Element ID field 1301 that may include an ID indicating that the current element is a ReFIRe Measurement Reporting Request Element, a length field 1302 that may contain the length of the ReFIRe Measurement Reporting Request Element, and a PHY and MAC layer Measurement and Reporting field 1303 that may be used to specify the measurement for the ReFIRe PHY layer measurement requested.

FIG. 14 is a diagram of an example implementation 1400 of the PHY and MAC layer Measurement and Reporting field described above. The PHY and MAC layer Measurement and Reporting field may include but is not limited to the following subfields: Number of Fields subfield 1401 and then in this example Field 1 1402 - Field N 1403. The Number of Fields subfield 1401 may be used to specify the number of fields that are contained in the PHY and MAC layer Measurement and Reporting field. Field 1 1402 - Field N 1403 may each contain information on a specific requested measurement. For example, each field may include an ID field 1404 that may be used to specify the STA or set of STAs that is requested to perform the ReFIRe measurement. The ID field 1404 may contain a MAC address (or a wildcard MAC address), an AID, a group ID, or any other type of ID that the STAs and the APs have agreed upon.

Each field may also include a ReFIRe Measurement parameters subfield 1405 that may indicate the parameters that the STA being requested should measure. The parameters may include, for example, an instantaneous measurement of the RSSI/RCPI level change during the reception of the received packet and report only if the RSSI/RCPI level change is greater than a predefined threshold. The parameters may further include cross-correlation or auto-correlation of STF and LTF or additional packet arrival detection based on STF/LTF, a ReFIRe Score, a DRM, a total number of receptions (as intended and unintended receiver), idle/busy periods (at both TX/RX), and a number of retries. The parameters may further include statistics of reception failure Cases 1-4, statistics on unknown reception failure for all cases which cannot be differentiated, MCS feedback, a probability of reception failure, a probability of collision (reception failure Case 2/reception failure Case 4/reception failure Case 2 + 4), and a conditional probability of collision given that a reception failure is identified.

Each field may also include a ReFIRe Measurement Specifications subfield 1406 that may provide specifications for the measurement that should be conducted. The specification may include a measurement channel and bandwidth. The requesting STA may specify the channel numbers and bandwidth for which the measurement should take place. This field may be omitted if the STA only measures the channel and bandwidth in which it received data packets.

The specifications may further include a measurement rule. For a one-time measurement, the measurement should take place only once. For example, the measurement may be performed one time only when the receiver detects an energy level higher than the CCA threshold or the receiver detects a valid PLCP header. For a repeated measurement, the measurement should take place several times when the specified criteria are met (not necessarily a simple repetition in time). For example, the measurement may be performed every time the receiver detects an energy level that is higher than the CCA threshold or if the receiver detects a valid PLCP header. For a scheduled measurement, the measurement may take place according to a schedule provided, for example, for a given beacon subinterval, or for a restricted access window (RAW) or access window duration.

The parameters may define a reporting rule. For example, the measurements may be reported according to a given or requested frequency or reporting criteria. For example, the measurements may be reported only if the FCS of the frame body of the received packet fails. The measurement report may be included in the NACK or Block ACK/NACK feedback frame or a separate measurement report frame. Alternatively, measurements may be reported every X time units.

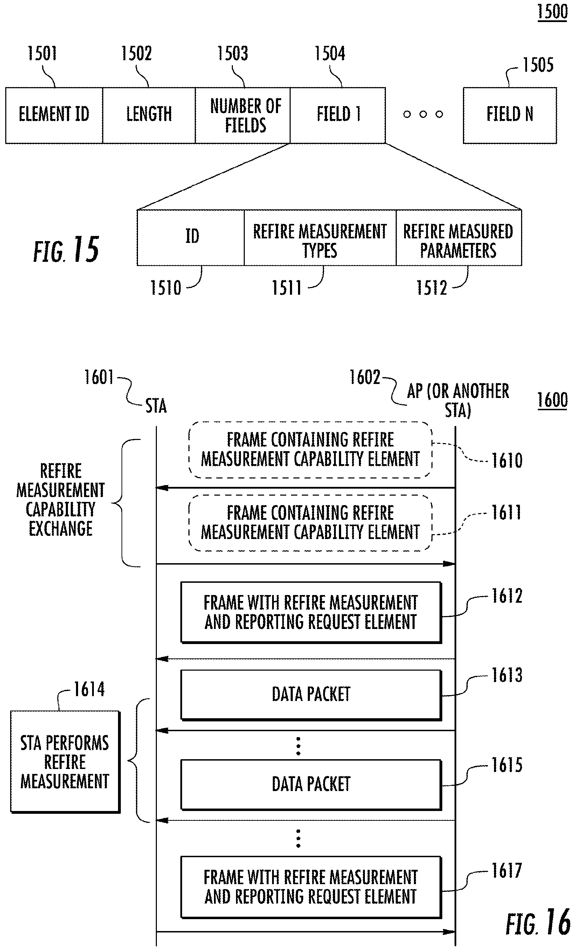

The ReFIRe measurement report may be sent back to the requesting STA according to the rules specified in the ReFIRe Measurement Reporting Request, using a frame containing the ReFIRe Measurement Report element. FIG. 15 is a diagram of an example ReFIRe Measurement Report element 1500. The ReFIRe Measurement Report element may include but is not limited to the following fields: an Element ID field 1501, a length field 1502, a number of fields field 1503, and field 1 1504 - field N 1505. The Element ID field 1501 may contain an ID indicating that the current IE is an Interference Measurement IE. The length field 1502 may contain the length of the Interference Measurement Information Element. The number of fields field 1503 may be used to specify the number of fields contained in the Interference Measurement IE. Each field may contain measured interference and parameters of one or more STAs and may include but is not limited to the following subfields: an ID field 1510, a ReFire Measurement Types or Parameters Types subfield 1511, and a ReFire Measured Parameters subfield 1512. The ID field 1510 may be used to specify the STA or set of STAs that is requested to perform ReFIRe measurement. The ID field 1510 may include, for example, a MAC address (or a wildcard MAC address), an AID, a group ID, or any other type of ID that the STAs and the APs have agreed upon. The ReFire Measurement Types or Parameters Types subfield 1511 may be used to specify the type of measured parameters in the ReFire Measured Parameters subfield 1512. Multiple types of parameters may be included in the ReFire Measured Parameters subfield 1512. The indication of the types of parameters may be encoded as a bitmap or other type of encoding to indicate multiple parameter types, such as an RSSI/RCPI level change, a cross-correlation or auto-correlation of STF and LTF, a ReFIRe Score, a DRM, a total number of receptions (as intended and unintended receiver), idle/busy periods (at both TX/RX), a number of retries, statistics of reception failure Cases 1 - 4, etc. The ReFire Measured Parameters subfield 1512 may include the values of the parameters measured by the reporting STA. The exact types of the parameters reported may be indicated in the ReFire Measurement Types or Parameters Types subfield 1511, such as an RSSI/RCPI level change, a cross-correlation or auto-correlation of STF and LTF, a total number of receptions (as intended and unintended receiver), idle/busy periods (at both TX/RX), and a number of retries.

The ReFIRe Measurement Report Element, or any subset of the subfields thereof, may be incorporated in a procedure as a subfield, or subsets of subfields, of any existing or new IE, or as a part of any control, management, or other type of frame, or in MAC/PLCP headers.

A STA may request another STA to perform ReFIRe measurement and reporting by sending out a frame that contains the ReFIRe Measurement Reporting Request element to one STA or more STAs using unicast, multi-cast, or broadcast addresses. The ReFIRe Measurement Reporting Request element, or any subset of the subfields thereof, may be implemented as a subfield or subsets of subfields of any existing or new IE, or as a part of any control, management, action, or other type of frame, or in MAC/PLCP headers.

The STA that receives the frame containing the ReFIRe Measurement Reporting Request element may respond with a frame containing the ReFIRe Measurement Report frame or a frame containing a ReFIRe Measurement Report element with the status code "SUCCESS" when accepting the ReFIRe Measurement Reporting request, or it may respond with the status codes "REJECT" or "UNKNOWN" if it is not capable of ReFIRe Measurement Reporting, or if it rejects the request.

If a STA has accepted the ReFIRe Measurement Reporting Request or if it is ReFIRe Measurement Reporting capable (for example, when dot11ReFIReMeasurementReporting-Enabled is true), it may follow the following procedures. The STA may monitor the medium for a period of time (for example, the period specified in the Interference Reporting Request) on the frequency channel and bandwidth requested. Such a monitoring period may also be a sliding window, and the STA may conduct monitoring at any given time when it is awake.

During the measurement period, the STA may record the following parameters: instantaneous measurement of an RSSI/RCPI level change during the reception of the received packet and report only if RSSI/RCPI level change is greater than a predefined threshold; cross-correlation or auto-correlation of STF and LTF or additional packet arrival detection based on the STF/LTF; a ReFIRe Score; a DRM; a total number of receptions (as intended and unintended receiver); idle/busy periods (at both TX/RX); a number of retries; statistics of reception failure Cases 1-4; statistics on unknown reception failure for all cases which cannot be differentiated; MCS feedback; a probability of reception failure; a probability of collision (reception failure Case 2/reception failure Case 4/reception failure Case 2 + 4); and a conditional probability of collision if a reception failure is identified.

The monitoring STA may report the ReFIRe Measurement report to the requesting STA according to the rules specified in the ReFIRe Measurement Reporting request, using a frame containing the ReFIRe Measurement Report element, which may be implemented as shown in the example of FIG. 15.

FIG. 16 is a flow diagram of an example procedure 1600 of ReFIRe measurement and reporting. In the example of FIG. 16, AP 1602 (or another STA) may send a frame containing a ReFire measurement capability element 1610 to a STA 1601, and STA 1601 may respond with a frame containing a ReFire measurement capability element 1611 to the AP 1602 (or other STA) as part of a ReFire measurement capability exchange. The AP 1602 (or other STA) may then send a frame with a ReFire Measurement and Reporting Request element 1612 to STA 1601. The AP 1602 (or other STA) may then send packets 1613 and 1615 (for example, data packets) to STA 1601, on which STA 1601 may perform ReFire measurements 1614. STA 1601 may then send a frame with a ReFire Measurement and Reporting element 1617 to AP 1602 (or other STA).

A request for a ReFIRe and/or Interference Measurement report may use a prioritized quality-of-service management frame (QMF) service. A management frame that is sent to request ReFIRe Measurement reports may be used with an associated QMF service enabled. QoS STAs that support the QMF service may differentiate their MMPDU delivery according to the MMPDU's access category. The access category of each MMPDU may be designated by the transmitter's current QMF policy.

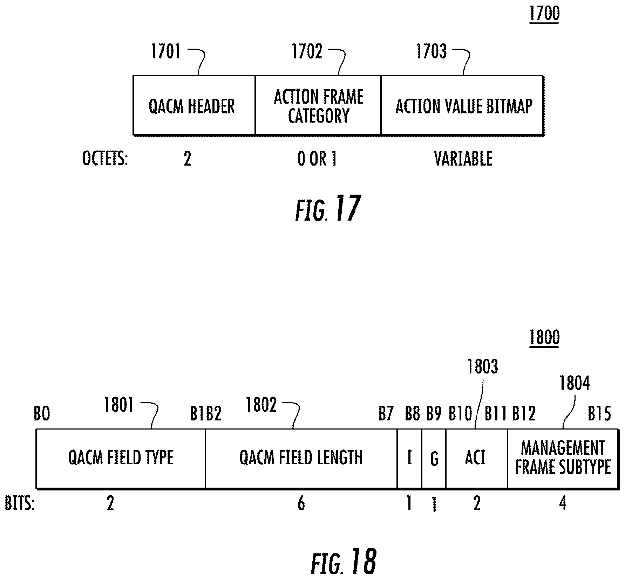

When such a QMF service is enabled for these reports, the following procedure may be used. As defined in the IEEE 802.11ae standard, a QMF Policy element may define a QMF access category mapping (QACM) of management frames and may be used to advertise and exchange QMF policy between STAs. FIG. 17 is a diagram of an example QMF Policy Element 1700. The QMF Policy Element may include a QAM Header 1701, an Action Frame Category 1702, and an Action Value Bitmap 1703.

FIG. 18 is a diagram of an example format of the QACM Header subfield 1800 of the QMF Policy Element (QACM field), which is defined in the IEEE 802.11ae standard. QACM Header subfield may include a QACM field type 1801, QACM field length 1802, ACI 1803, and management frame subtype 1804. The Action Value Bitmap subfield may be included when the QACM Policy is specified for a subset of Action frame types in the Action Frame Category subfield. The management frame subtype 1804 may be defined as shown in Table 2, which is an extension the IEEE 802.11 standard.

Table 2 - Valid type and subtype combinations

| Type Value b3, b2 | Type description | Sub Type value b7, b6, b5, b4 | Subtype Description |
| --- | --- | --- | --- |
| 11 | Data | 0000 | ReFIRe Data |
| 11 | Data | 0001 | ReFIRe Data+CF-Ack |
| 11 | Data | 0010 | ReFIRe Data+CF-Poll |
| 11 | Data | 0011 | ReFIRe Data+CF-Ack-CF-Poll |
| 11 | Data | 0100 | ReFIRe Null (non data) |
| 11 | Reserved | 0101-1111 | Reserved |

Additional subtype information may also be present in Table 2 that may include interference measurement information either associated with, or in addition to, the ReFIRe information.

When a packet is not correctly received as described in the cases detailed herein, the transmitting STAs may need to conduct exponential backoff before attempting to conduct another medium access. Here, the receiving STA, which may be either the intended receiving STA or the unintended STAs in the neighborhood, may need to wait for an extended period of time (e.g., an EIFS) before being able to attempt medium access. This type of reception failure remediation procedure may lead to low MAC efficiency and deteriorating performance, particularly when APs and STAs are densely deployed and when WiFi networks are loaded with heavy traffic. Methods and apparatuses for reception failure remediation are described herein, including NACK methods for reception failure remediation and methods for transmitter and receiver reception failure remediation. These methods may improve the efficiency of the MAC.

A STA may use a NACK signal to indicate that a packet that has been transmitted to the STA was not correctly received in accordance with one embodiments described herein. Example NACK frames are detailed below, and example reception failure remediation procedures using these example NACK frames are also described below.

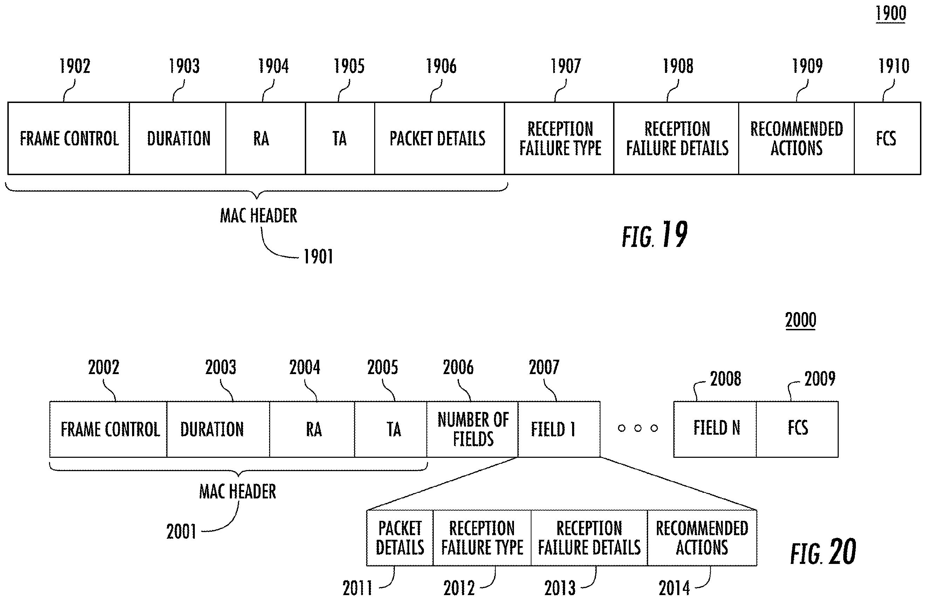

FIG. 19 is a diagram of an example NACK frame to be included in a NACK signal for reception failure remediation 1900. The example NACK frame illustrated in FIG. 19 may include but is not limited to the following fields: a MAC header 1901 that includes frame control 1902, duration 1903, receiver address (RA) 1904, transmitter address (TA) 1905, and packet details fields 1906. The NACK frame may further include a reception failure type 1907 field, a reception failure details field 1908, a recommended actions field 1909, and an FCS field 1910 including the FCS code for the packet.

The frame control field 1902 in the MAC header may include an indication that the current frame is a NACK frame. For example, the NACK frame may be identified using a combination of a type and a subtype frame. The frame control field or any other field in the frame or PLCP/MAC header may include an extension field indicating that the frame is a NACK frame. Such extension field may be interpreted independently or in combination with the type and/or subtype field. The type of the NACK frame may be set as management, control, data, NDP or extension.

The duration field 1903 may be set to the value for which the NACK reserves the medium. The RA field 1904 may include the address of the destination STA of the NACK frame. The TA 1905 field may include the address of the transmitting STA that sent the NACK frame.

The packet details field 1906 may specify which packet or packets the NACK is related to. The packet details field 1906 may be implemented using one or more sequence numbers or values such as "immediate previous packet". The packet details field 1906 may be part of the MAC header 1901 or part of the frame body. The packet details field 1906 may be omitted if it is transmitted immediately after the reception of the packet has failed.

The reception failure type field 1907 may specify which reception failure has been detected for the packet or packets. Potential values include an indication of reception failure Case 1, reception failure Case 2, reception failure Case 3, reception failure Case 4, or an unknown reception failure type. In an embodiment, the indication may be implemented as integers, with each value associated with a specific reception failure type.

The reception failure details field 1908 may specify details of the identified reception failure. For example, when the reception failure type has been identified as reception failure Case 2, the reception failure details field may indicate the time at which the received packet was corrupted, for example, the time at which an overlapped packet was detected during the reception of the packet. In this example, the overlap time may be specified, for example, as a number of OFDM symbols, a time, or a code word. If a number of OFDM symbols are used, the reception failure details field may include the number of the OFDM symbol for which the overlap was detected or the number of good OFDM symbols that were received where the overlap was detected. If a time is used, the reception failure details field may include the time at which the overlap was detected or as the amount of time before the overlap was detected. The reference point of the time may be, for example, the timer synchronization function (TSF) timer, some common time reference such as the Greenwich Mean Time (GMT), or the time of the start of the received packet or MAC header. In all of these measurements, the receiver may adjust for any imprecision in the timing of the detection of the overlap by indicating a time or OFDM symbol that was before the actual time or OFDM symbol where the overlapping was detected.

The recommended actions field 1909 may indicate recommended actions that the receiving STA provides to the transmitting STA for remedying the reception failure. The recommended actions field may include one or more fields, each field corresponding to one recommended action.

In one example embodiment, each field in the recommended actions field 1909 may have two subfields (type and detail), and the recommended actions may include one or more of an MCS recommendation, a Request to Send/Clear to Send (RTS/CTS) recommendation, an immediate transmission recommendation, a normal retransmission recommendation, a HARQ transmission recommendation or an increase transmit power recommendation. For an MCS recommendation, the type subfield may indicate MCS action and the detail subfield may include a specific MCS that is recommended for use. Alternatively, the detail subfield for an MCS recommendation may include an action, such as "decrease MCS". For an RTS/CTS recommendation, the type subfield may indicate "RTS/CTS" and the detail subfield may include, for example, "use RTS/CTS for this retransmission" or "use RTS/CTS for all following transmissions to the destination". For an immediate retransmission indication, the type subfield may indicate "immediate retransmission" and the detail subfield may include, for example, "complete retransmission" or "partial retransmission". For a normal retransmission recommendation, the type subfield may indicate "normal retransmission". For a HARQ transmission recommendation, the type subfield may indicate "HARQ transmission," and the detail subfield may indicate "chase combining" or "incremental redundancy," as well incremental redundancy versions. For an increase transmit power recommendation, the type subfield may indicate "adjust transmit power," and the detail subfield may indicate a value that the transmitting STA should use to increase the transmit power when transmitting to the receiving STA.

FIG. 20 is a diagram of another example NACK frame for reception failure 2000. In this example, a STA may indicate a specific number of packets that it has not correctly received. The example NACK frame illustrated in FIG. 20 may include but is not limited to the following fields: a MAC header 2001 that includes frame control 2002, duration 2003, receiver address (RA) 2004, and transmitter address (TA) 2005. The NACK frame may further include a number of fields field 2006 and, for example, field 1 2007 - field N 2008, and an FCS field 2009 including the FCS code for the packet. In the example of FIG. 20, the NACK frame may include a number of fields field 2006 and, for example, field 1 2007 - field N 2008 following the "number of fields" field, each of which may correspond to a packet that was not correctly received. Each of the fields that correspond to a packet that was not correctly received may include a number of different subfields, such as a packet details field 2011, a reception failure type 2012 field, a reception failure details field 2013, and a recommended actions field 2014.

A NACK frame, such as either of the NACK frames illustrated in FIGs. 19 and 20, may be used in a reception remediation procedure. Example reception remediation procedures are described below.

In an example reception remediation procedure, a receiving STA may have detected and identified reception failures during or immediately after the reception of a packet. On a condition that the STA has detected or identified at least one reception failure, the receiving STA may generate and send a NACK to the transmitting STA immediately. Alternatively, the receiving STA may send the NACK to the transmitting STA at a later point in time on a condition that: the receiving STA is scheduled to receive one or more packets from a transmitting STA during a scheduled interval (e.g., an asynchronous power save delivery (APSD) interval, a power save multi-poll (PSMP) interval, RAW, PRAW, TWT, or any other type of scheduled or assigned interval); or the receiving STA has identified that it is the intended receiving STA, and the receiving STA has identified the transmitting STA.

In a case where the receiving STA is scheduled to receive one or more packets from a transmitting STA during a scheduled interval, the receiving STA may send a NACK to the scheduled transmitting STA regardless of the CCA state, which may be transmitted after some maximum packet length after the start of the scheduled or assigned slot. The receiving STA may indicate any type of reception failure identified, such as reception failure Case 1, reception failure Case 2, reception failure Case 3, reception failure Case 4, and unknown reception failure type.

In a case where the receiving STA has identified that it is the intended receiving STA and has identified the transmitting STA, the receiving STA may transmit a NACK frame when the receiving STA has obtained a TXOP, such as a scheduled or obtained EDCA TXOP. This may occur, for example, when the receiving STA correctly decodes the PLCP header (e.g., reception failure Case 1 or reception failure Case 2), the PLCP header includes an indication of one or more of the following: for a downlink (DL) case, a DL transmission indication, a partial AID that matches the receiving STA's AID, the RA address in the MAC header matches the MAC address of the receiving STA, or the TA address in the MAC header matches the AP's MAC address; for an uplink (UL) case, a UL transmission indication, a partial AID that matches the ID of the AID, the RA address in the MAC header matches the MAC address of the AP, or the TA address in the MAC header matches the MAC address of the STA that is associated with the AP. This may also occur, for example, when the RA field and TA field (or the equivalents thereof) are correctly identified in a newly defined header that may be validated (e.g., by its own FCS or FEC field). This may also occur, for example, when the RA field and TA field (or the equivalents thereof) are correctly identified in a MAC header that may be validated ( e.g., by its own FCS or FEC field).

The receiving STA may report to the transmitting STA the type of reception failures detected in the reception failure type and reception failure details fields in the NACK frame or in any other type of control, management, data or extension frame.

The receiving STA may also recommend to the transmitting STA appropriate actions in the NACK frame or any other type of control, management, data, NDP or extension frames to the transmitting STA. For example, if a reception failure Case 1 has been detected, the receiving STA may include one or more of the following actions in the recommended actions field: decrease MCS, increase transmit power, normal retransmission, immediate retransmission or HARQ transmission. If a reception failure Case 2 has been detected, the receiving STA may include one or more of the following actions in the recommended actions field: use RTS/CTS for retransmission, use RTS/CTS for all subsequent transmissions to this destination, normal retransmission, immediate retransmission or HARQ transmission. If a reception failure Case 3 has been detected, the receiving STA may include one or more of the following actions in the recommended actions field: increase transmit power, normal retransmission, immediate retransmission, or HARQ transmission. If a reception failure Case 4 or unknown type of reception failure has been detected, the receiving STA may include one or more of the following actions in the recommended actions field: normal retransmission, immediate retransmission, or HARQ transmission.

The receiving STA may need to wait for an EIFS time at the end of the transmission or at the time when CCA becomes idle on a condition that a reception failure Case 3 and/or reception failure Case 4 has been identified. Further, if the receiving STA has identified itself as the intended receiving STA, it may wait an EIFS time at the end of the transmission or at the time when CCA becomes idle on a condition that a reception failure Case 1 has been identified.

On a condition that the transmitting STA receives the NACK from the receiving STA, the transmitting STA may do one or more of the following. If a reception failure Case 1 has been identified, the transmitting STA may not perform exponential backoff, may increase transmit power, adjust transmit power control (TPC), may decrease MCS, and/or may follow the recommended actions included in the NACK or any other type of frame or frames from the receiving STA. If a reception failure Case 2 has been identified, the transmitting STA may not perform exponential backoff, may use an RTS/CTS exchange for retransmission of the packet in question, may use an RTS/CTS exchange for any future packets it transmits to the receiving STA, and/or may follow the recommended actions included in the NACK or any other type of frame or frames from the receiving STA. If a reception failure Case 3 has been identified, the transmitting STA may not perform exponential backoff, may increase transmit power, adjust TPC, and/or may follow the recommended actions included in the NACK or any other type of frame or frames from the receiving STA. If a reception failure Case 4 or unknown type of reception failure has been identified, the transmitting STA may perform exponential backoff, increase transmit power, adjust transmit power control (TPC), and/or follow the recommended actions included in the NACK or any other type of frame or frames from the receiving STA.

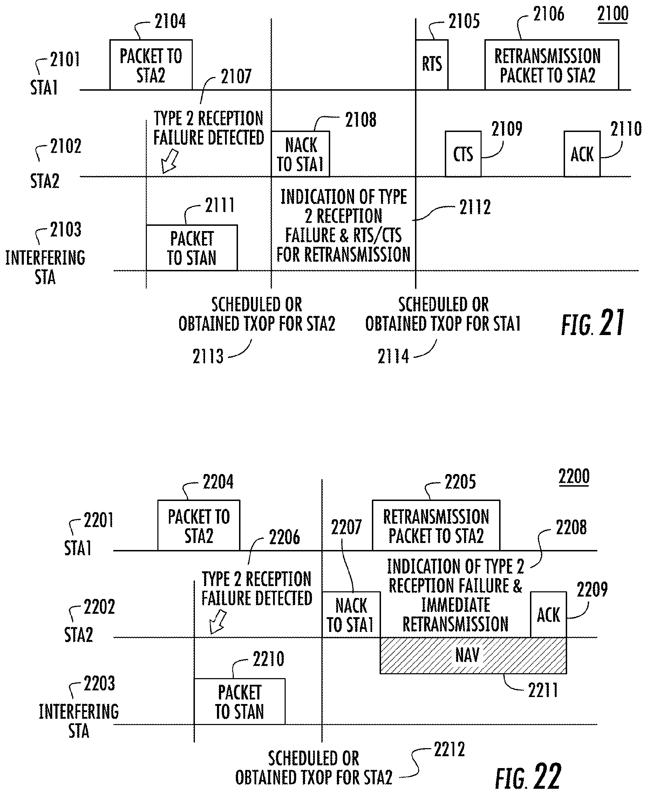

FIG. 21 is a diagram of an example reception failure remediation procedure 2100 using RTS/CTS. In the example illustrated in FIG. 21, a transmitting STA (STA1 2101) transmits a packet 2104 to a receiving STA (STA2 2102). However, while STA2 2102 is receiving the packet, a hidden node (interfering STA 2103) transmits a packet 2111 (for example to STA N) that overlaps with the packet transmitted to STA2 2102. Accordingly, STA2 may detect a reception failure Case 2 2107 and transmit a NACK 2108 to STA1 2101 either immediately (e.g., when the packet was transmitted to STA2 2102 in a scheduled interval) or when STA2 2102 obtains a TXOP through scheduling or contention 2113.

STA2 2102 may inform 2112 STA1 2101 that the reception failure is a reception failure Case 2 and may recommend that STA1 2101 use an RTS/CTS exchange when retransmitting to STA2 2102. On a condition that STA1 2101 receives the NACK, it may not need to conduct exponential backoff and may instead transmit an RTS 2105 to STA2 2102 when STA1 2101 obtains a TXOP, either through contention or scheduling 2114. In response to receiving a CTS 2109 from STA2 2102, STA1 2101 may conduct the retransmission 2106 to STA2 2102, which may respond with ACK 2110. The example procedure illustrated in FIG. 21 is described with respect to a reception failure reception failure Case 2; however, it may be used for other types of reception failures or for HARQ transmission schemes.

FIG. 22 is a diagram of an example reception failure remediation procedure using immediate retransmission 2200. In the example illustrated in FIG. 22, a transmitting STA (STA1 2201) transmits a packet 2204 to a receiving STA (STA2 2202). While STA2 2202 is receiving the packet, a hidden node (interfering STA 2203) transmits a packet 2210 (for example to STA N) that overlaps with the packet transmitted to STA2. Accordingly, STA2 2202 may detect a reception failure Case 2 2206 and may transmit a NACK 2207 to STA1 2201 either immediately (e.g., when the packet was transmitted to STA2 in a scheduled interval) or when STA2 2202 obtains a TXOP through scheduling or contention 2212. STA2 2202 may use the NACK 2207 to conduct a network allocation vector (NAV) reservation 2211 for the retransmission 2205 from STA1 2201 to STA2 2202 as well as any ACK 2209 that may follow by setting the duration field of the NACK frame to the duration of the retransmission and setting an ACK duration as well as any IFS time needed. STA2 2202 may adjust the duration of the retransmission using decreased MCS if any decreased MCS is also recommended.

STA2 2202 may inform 2208 STA1 2201 that the reception failure is of a reception failure Case 2 and may recommend that STA1 2201 use immediate retransmission when retransmitting 2205 to STA2. When STA1 2201 receives the NACK, 2207 it may not need to conduct exponential backoff. Instead, STA1 2201 may start retransmitting 2205 to STA2 2202 in response to receiving the NACK 2207 from STA2 2202 (e.g., after a SIFS time from the end of the NACK frame). STA2 2202 may acknowledge (ACK 2209) the retransmission 2205 if STA2 2202 has received the retransmission correctly.

The example procedure illustrated in FIG. 22 is described with respect to a reception failure Case 2; however, it may be used for other types of reception failures or for HARQ transmission schemes.

Methods for transmitter and receiver reception failure remediation are described below, including, for example, mixed retransmission, partial retransmission and mixed partial retransmission. A mixed retransmission may include both the retransmission packet session that was corrupted in the previous transmission and also a new transmission packet session. A mixed retransmission method may be implemented using aggregated MAC protocol data units (A-MPDUs) or aggregated PSDUs (A-PSDUs) and may be used for reception failure Case 1 and reception failure Case 2. With an A-MPDU format, a retransmission may include several retransmitted MPDU subframes and new MPDU subframes. An A-MPDU format may be modified to enable HARQ combining.

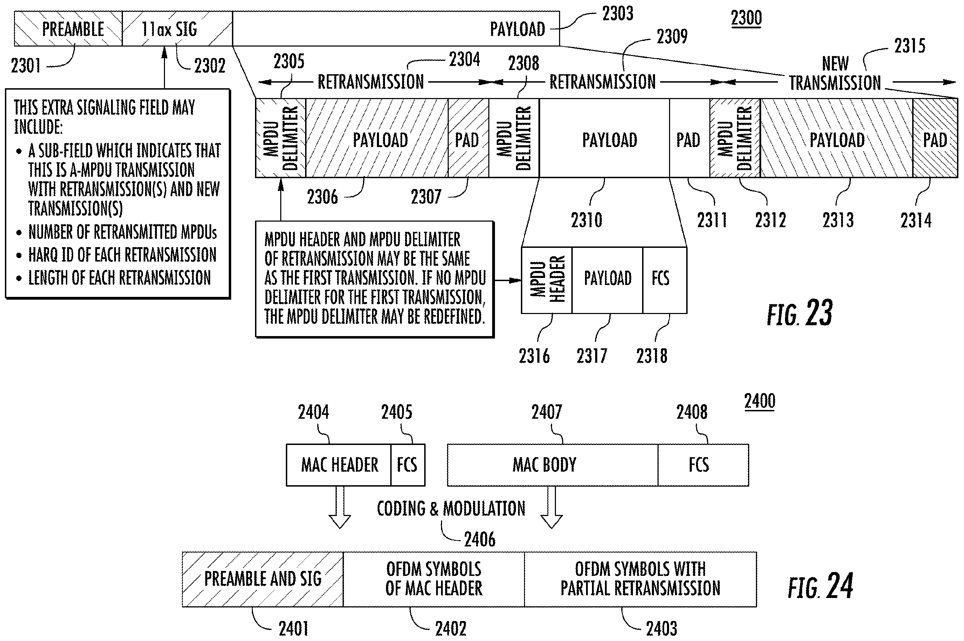

FIG. 23 is a diagram of an example modified A-MPDU packet 2300. The A-MPDU packet may include a preamble 2301, an 11ax signaling field (IEEE 802.11ax SIG field) 2302, and a payload 2303. Also, as illustrated in the example of FIG. 23, the A-MPDU packet includes two retransmission MPDU subframes 2304 and 2309 and one new transmission MPDU subframe 2315. The retransmission MPDU subframes 2304 and 2309 may include MPDU delimiters 2305 and 2308, payloads 2306 and 2310, and pads 2307 and 2311. The new transmission MPDU subframe 2315 may include MPDU delimiter 2312, payload 2313, and pad 2314. A retransmission payload may include MPDU header 2316, payload 2317, and FCS 2318.

In an embodiment, the MPDU header of the retransmission MPDU subframes 2304 and 2309 may remain the same as the original transmission.

Further, the MPDU delimiters 2305 and 2308 of the retransmission MPDU subframes may either remain the same as the original transmission if the delimiter was used for the original transmission or may be redefined if the delimiter was not used for the original transmission. If the MPDU delimiter of the retransmission MPDU subframe is redefined, the delimiter may be replaced with a sequence of all zeros or may be modified as in Table 3 below.

TABLE 3

| Field | Size (bits) | Description |
|---|---|---|
| Delimiter Signature | 8 | The same sequence as current delimiter signature |
| Reserved | 18 | Reserved |
| Padding | 6 | All zero sequence which terminates the BCC coding for delimiter field. |

An extra signaling field (e.g., an IEEE 802.11ax SIG field for mixed retransmission) may be included after the conventional preamble and signaling. In a traditional SIG field, one or two bits may be used to indicate that an IEEE 802.11ax SIG field for retransmission follows the preamble. Retransmission related information for a related subframe or subframes may be carried in this field. The IEEE 802.11ax SIG field 2302 for mixed retransmission may include the fields provided in Table 4 below.

TABLE 4

| Field | Description |
|---|---|
| Retransmission type | Indicate this is a mixed retransmission with A-MPDU format |
| N_subframes | Number of MPDU subframes |
| N_Retransmissions | Number of retransmission subframes |
| Retransmission Element 1 | May includes Sequence Number/HARQ process ID, Retry, RV, Length for the first retransmission MPDU |
| ... | ... |
| Retransmission Element N_Retransmissions | May includes Sequence Number/HARQ process ID, Retry, RV, Length for the N_retransmission MPDU |

Partial retransmission may include retransmission of only the corrupted portions of the original transmission, for example, in a reception failure Case 2 when the receiving STA signals the transmitting STA that some OFDM symbols of a packet are corrupted. When the receiving STA detects a reception failure Case 2, where the received packet fails due to partially overlapping packets, the receiver may signal the transmitter in a control frame (e.g., NACK frame) that certain OFDM symbols may be corrupted or may have lower reliability. The transmitting STA may be configured to retransmit just the corrupted OFDM symbols so that the receiver may combine them with the original transmission and then decode the whole packet.

In one embodiment, the MAC header of the original transmission may be separately coded or terminated by padding zeros. In this case, the MAC header of the original transmission may be protected by its own FCS. The transmitter may prepare the MAC header, the MAC body, the preamble and the signaling field as a PHY header for retransmission.

FIG. 24 is a diagram of an example partial retransmission 2400 with a separately coded MAC header. To prepare the MAC header 2404 for retransmission, the MAC header 2404 may be separately encoded and protected by its own FCS 2405 and may include partial retransmission information, such as retransmission type (which may indicate that this is a partial retransmission), a HARQ process ID, and the retransmitted OFDM symbol index (e.g., the index of the starting OFDM symbol from the original transmission may be included in the retransmission). A preamble and SIG 2401 and OFDM symbols of the MAC header 2402 may be retransmitted.

To prepare the MAC body 2407 for retransmission, the MAC body 2407 may be coded and modulated 2406 in the same manner as the previous transmission, and in the OFDM symbol domain, only the required symbols may be retransmitted 2403. The transmitter may collect all the information bits of the MAC frame body from the last transmission.

The previously transmitted MAC header may not be included here, and the MAC frame body may be protected by its own FCS 2408. The transmitter may pass the collected information bits (including the MAC body 2407 and the FCS 2408) to the transmission block diagram using the same MCS and transmission schemes as the previous transmission. The transmitter may obtain N OFDM symbols, check the feedback frame from the receiver, and transmit OFDM symbols that are indicated as less reliable symbols. For example, the feedback frame may indicate OFDM symbols $k$ to $k+m$ are not reliable. Then, the transmitter may aggregate OFDM symbols k to $k+m$ from the N OFDM symbols to the coded and modulated MAC header. In another embodiment, the transmitter may add a margin to the number of OFDM symbols used in the retransmission (i.e., it may transmit more OFDM symbols than indicated). For example, it may transmit OFDM symbols $k-j1$ to $k+m+j2$. Some partial retransmission related information may be indicated in the SIG field, such as retransmission type, HARQ process ID, and retransmitted OFDM symbol index.

In another embodiment, the MAC header of the original transmission may be protected together with the MAC body by one FCS (i.e., the entire MAC frame, including the MAC header, the MAC body and the FCS may be coded together). In this case, the SIG field of the original transmission may include necessary information such that the receiver may acquire enough information to begin a ReFIRe remediation process.

In this embodiment, the transmitter may reuse the MAC header and MAC body transmitted in the original transmission and protect the MAC header and MAC body with one FCS. In this case, the entire MAC frame may be passed to the PHY layer, and the transmitter may use the same MCS and transmission schemes as the previous transmission. Once the transmitter obtains N OFDM symbols, it may check the feedback frame from the receiver and retain certain OFDM symbols that were indicated as less reliable. For example, the feedback frame may indicate that OFDM symbols $k$ to $k+m$ are not reliable. Here, the transmitter may aggregate OFDM symbols k to $k+m$ from the N OFDM symbols to the coded MAC header. In another example, the transmitter may add a margin to the number of OFDM symbols used in the retransmission (i.e., it may transmit more OFDM symbols than indicated). In the previous example, it may transmit OFDM symbols $k-j1$ to $k+m+j2$.

The transmitter may prepare the preamble and signaling field as a PHY header for retransmission. Some partial retransmission related information may be indicated in the SIG field, such as retransmission type, HARQ process ID, and retransmitted OFDM symbol index.

When the receiving STA receives a partial retransmission for a reception failure Case 1, the receiving STA may combine the retransmitted signal with the original transmission at the receiver to improve the Log Likelihood Ratios (LLRs) of the received bits and improve the link performance. For a reception failure Case 2, because the reception failure is due to a collision, blind HARQ combining of the retransmitted signal and the originally transmitted signal may result in worse performance. Accordingly, in one embodiment, the receiving STA may discard the less reliable information in the original transmission and replace it with the information received from the retransmission before passing the combined LLRs to the decoder. In the case where the transmitting STA added a margin to the number of OFDM symbols used in the retransmission, the receiving STA may HARQ combine the OFDM symbols in the margin to improve the overall performance. In another embodiment, the receiving STA may weigh the less reliable information in the original transmission by a suitable weighting factor before combining it with the retransmission and passing the combined LLRs to the decoder.

For a mixed partial retransmission, when the receiving STA detects a reception failure Case 2, where the received packet fails due to partially overlapped packets, the receiving STA may signal the transmitting STA in a control frame (e.g., NACK frame) that certain OFDM symbols may be corrupted or have lower reliability. Here, the transmitting STA may decide to retransmit the corrupted OFDM symbols together with new transmissions. The receiving STA may combine the retransmitted OFDM symbols with the original transmission and decode.

A mixed partial retransmission may include both the partial retransmission packet session that was corrupted in the previous transmission and also a new transmission packet session. The mixed partial retransmission may be implemented using A-MPDU or A-PSDU frames.

Under some circumstances, a self decodability requirement may determine whether a retransmission must be decodable even if it is not combined with a previous transmission. In this case, the originally coded stream may be punctured in a way that ensures that all the bits needed to decode the packet are present.

For a reception failure Case 1, where the received packet fails because it uses too aggressive an MCS for the frame body, the received signals may be corrupted by noise only. The retransmitted signal may be set to the actual bits needed to improve the original transmission such that when combined with the original transmission, the resulting packet is decodable. In this case, the self-decodability of the retransmissions may not be necessary.

For a reception failure Case 2, where the received packet fails due to partially overlapping packets, the corruption from the interfering packet may cause the packet to be undecodable even with HARQ combining (especially in cases where the interference power is high). In this case, the retransmitted signal may need to be self-decodable in case the corruption from the overlapping packets renders the original transmission useless in the overlapped region.

Embodiments:

1. A method for use in a station (STA), the method comprising:

identifying a reason for reception failure of a packet.

2. The method of embodiment 1, wherein the reception failure is due to an overly aggressive MCS used for a frame body of the packet.

3. The method of embodiment 1, wherein the reception failure is due to a partially overlapping packet.

4. The method of embodiment 1, wherein the reception failure is due to noise/white noise like interference.

5. The method of embodiment 1, where the reception failure is due to a collision.

6. The method as in any one of the previous embodiments further comprising:

detecting that a Clear Channel Assessment (CCA) is busy.

7. The method as in any one of the previous embodiments further comprising:

determining whether a Physical Layer Convergence Protocol (PLCP) header of a packet was successfully decoded.

8. The method of embodiment 7, further comprising:

on a condition that the PLCP header of the packet was successfully decoded, determining whether a frame body frame check sequence (FCS) passes.

9. The method of embodiment 8, further comprising:

on a condition that the frame body FCS passes, determining that the packet was received successfully.

10. The method of embodiment 8, further comprising:

on a condition that the frame body FCS fails, determining whether there was a sudden change in a received power level during reception of the packet, or if there is a packet overlap.

11. The method of embodiment 8, further comprising:

on a condition that the frame body FCS fails and a valid preamble is detected, determining whether the CCA is busy after a length of time indicated in the PLCP header has terminated.

12. The method of embodiment 11, further comprising:

on a condition that the CCA is busy, determining that the reception failure is a reception failure Case 2, wherein the reception failure Case 2 is a partial packet overlap.

13. The method of embodiment 11, further comprising:

on a condition that the CCA is not busy, determining whether there was a sudden change in a received power level during reception of the packet, or if there is a packet overlap.

14. The method of embodiment 10, further comprising:

on a condition that the frame body FCS fails, determining whether there was a sudden change in a received power level during reception of the packet, or if there is a packet overlap.

15. The method of embodiment 14, further comprising:

on a condition that there was no sudden change in a received power level nor a packet overlap, determining if an MCS of the frame body is greater than the MCS of a preamble of the packet.

16. The method of embodiment 15, further comprising:

on a condition that the MCS of the frame body is not greater than the MCS of a preamble of the packet, determining that the reception failure is of an unknown type.

17. The method of embodiment 15, further comprising:

on a condition that the MCS of the frame body is greater than the MCS of a preamble of the packet, determining that the reception failure is a reception failure Case 1.

18. The method of embodiment 14, further comprising:

on a condition that there was a sudden change in a received power level or a packet overlap, determining that the reception failure is a reception failure Case 2.

19. The method of embodiment 7, further comprising:

on a condition that the PLCP header of the packet was not successfully decoded, determining whether a high power level was observed for the packet.

20. The method of embodiment 19, further comprising:

on a condition that a high power level was not observed for the packet, determining that the reception failure is a reception failure Case 3.

21. The method of embodiment 19, further comprising:

on a condition that a high power level was observed for the packet, determining whether strong short training field (STF)/long training field (LTF) correlation was observed.

22. The method of embodiment 21, further comprising:

on a condition that strong short training field (STF)/long training field (LTF) correlation was observed, determining that the reception failure is a reception failure Case 4.

23. The method of embodiment 22, further comprising:

on a condition that strong short training field (STF)/long training field (LTF) correlation was not observed, determining that the reception failure is of an unknown type.

24. The method as in any one of the previous embodiments, further comprising:
updating a Reception Failure Identification and Remediation (ReFIRe) measurement statistics database.

25. The method as in any one of the previous embodiments, wherein auto-correlation is used to determining whether strong short training field (STF)/long training field (LTF) correlation was observed.

26. The method as in any one of the previous embodiments, wherein cross-correlation is used to determining whether strong short training field (STF)/long training field (LTF) correlation was observed and to perform timing/frequency offset correction.

27. The method as in any one of the previous embodiments, wherein the PLCP header has cyclic redundancy check (CRC).

28. The method as in any one of the previous embodiments, further comprising:
determining a received signal strength indication (RSSI).

29. The method as in any one of the previous embodiments, further comprising:
detecting a plurality of pilots, wherein the plurality of pilots are used for phase tracking.

30. The method as in any one of the previous embodiments, further comprising:
receiving a frame containing a ReFIRe measurement capability element.

31. The method as in any one of the previous embodiments, further comprising:
transmitting a frame containing a ReFIRe measurement capability element.

32. The method as in any one of the previous embodiments, further comprising:
receiving a frame with a ReFIRe Measurement and Reporting Request element.

33. The method as in any one of the previous embodiments, further comprising:
receiving a data packet.

34. The method as embodiment 33, further comprising:
performing a ReFIRe measurement based on the received data packet.

35. The method as in any one of the previous embodiments, further comprising:
transmitting a frame with a ReFIRe Measurement and Reporting Report element.

36. The method as in any one of the previous embodiments, wherein the determining whether there was a sudden change in a received power level during reception of the packet, or if there is a packet overlap further comprises determining an Instantaneous Receive Power (IRP) measurement.

37. The method as in embodiment 36, wherein the IRP measurement is defined as an average received power over a short period.

38. The method of embodiment 37, further comprising:
determining a variation of the IRP measurement.

39. The method of embodiment 38, further comprising:
determining a Reception Power based Failure Type Indicator (RPFTI) that may be used to distinguish a type of reception failure.

40. The method of embodiment 39, wherein the RPFTI is based on the IRP measurement and the variation in the IRP measurement.

41. The method of embodiment 40, further comprising:
determining a Reception Power based Reliability Indicator (RPRI) that may be used to indicate a reliability of a corrupted received signal.

42. The method as in embodiment 41, wherein the RPFTI is based on the IRP measurement and the variation in the IRP measurement.

43. The method as in any one of the previous embodiments, further comprising:
calculating a decoder reliability metric (DRM).

44. The method as in embodiment 43, further comprising:
using the DRM in a procedure to indicate a reliability of a plurality of decoded bits prior to determining if the decoded bits have passed a CRC check.

45. The method as in embodiment 43, wherein the calculating is based on metrics that the STA acquired during a process of decoding the packet.

46. The method as in embodiment 43, wherein the DRM is defined as an octet value wherein a zero or low number represents a decoded codeword from a corrupted packet that is very unreliable, and a higher octet value represents a decoded codeword that is considered reliable.

47. The method as in embodiment 43, wherein the DRM is used either prior to a computation of a CRC checksum, or as additional information on a condition that a CRC checksum failure occurs.

48. The method as in any one of the previous embodiments, further comprising:
defining a ReFIRe score that is a weighted combination of a plurality of factors.

49. The method as in any one of the previous embodiments, further comprising:
using a ReFIRe Measurement Reporting and Utilization Capability Information Element (IE) to indicate a capability.

50. The method as in embodiment 49, wherein the ReFIRe Measurement Reporting and Utilization Capability IE includes at least one of an element ID field, a length field, and a ReFIRe Measurement and Reporting Capability field.

51. The method as in embodiment 50, wherein the ReFIRe Measurement and Reporting Capability field includes at least one of PHY layer measurement and reporting, MAC layer statistics measurement and reporting, and ReFIRe Measurement Reporting Options.

52. The method as in any one of the previous embodiments, further comprising:
setting a parameter dot11ReceptionFailureDetection to TRUE to indicate that the STA has implemented reception failure detection on a condition that the STA is capable of detecting a nature of a reception failure.

53. The method as in any one of the previous embodiments, further comprising:
including a ReFIRe Measurement Reporting and Utilization Capability IE in a Probe Request, Association Request, or other type of frame to specify the STA's own capability of ReFIRe measurement and reporting as well as capabilities of utilizing a ReFIRe measurement.

54. The method as in any one of the previous embodiments, further comprising:
sending a ReFIRe Measurement Reporting Request element to request one or more STAs to conduct ReFIRe measurement and reporting.

55. The method as in embodiment 54, wherein the ReFIRe Measurement Reporting Request element includes at least one of an element ID field, a length field, and a physical (PHY) and medium access control (MAC) layer measurement and reporting field.

56. The method as in any one of the previous embodiments, further comprising:
receiving a ReFIRe Measurement report.

57. The method as in embodiment 56, wherein the ReFIRe Measurement report is based on a plurality of rules specified in a ReFIRe Measurement Reporting Request.

58. The method as in embodiment 57, wherein the ReFIRe Measurement report includes at least one of an element ID field, a length field, and a number of fields field, and a plurality of fields that contain measured interference and parameters of one or more STAs.

59. A method for use in a station, the method comprising:

transmitting a frame containing a Reception Failure Identification and Remediation (ReFIRe) measurement capability element;

receiving a frame with a ReFIRe Measurement and Reporting Request element;

receiving a data packet;

performing a ReFIRe measurement based on the received data packet and on the received ReFIRe Measurement and Reporting Request element; and

transmitting a frame with a ReFIRe Measurement and Reporting Report element, wherein the ReFIRe Measurement and Reporting Report element is based on the ReFIRe measurement.

60. The method of embodiment 59, wherein the ReFIRe measurement indicates a type of reception failure.

61. A method for use in a station (STA) for detecting collisions during packet reception, the method comprising:

identifying an arrival of a received packet; and

performing a decoding process on the received packet.

62. The method of embodiment 61, further comprising:
on a condition that the decoding process fails:

running a packet arrival detection block on the received packet; and

determining a correlation value of the packet detection block.

63. The method of embodiment 62, further comprising:
on a condition that the correlation value of the packet detection block exceeds a predetermined threshold, indicating the presence of a colliding packet.

64. The method of embodiment 62, further comprising:
on a condition that the correlation value of the packet detection block is less than a predetermined threshold, indicating the absence of a colliding packet.

65. A method for providing an inter-layer indication of power level changes during the reception of a packet, the method comprising:

generating a PMD_PowerChange.indication primitive; and

transmitting the PMD_PowerChange.indication primitive to a Physical Layer Convergence Protocol (PLCP) entity and a Medium Access Control (MAC) layer entity, wherein the PMD_PowerChange.indication primitive includes a PowerChange and Time parameter.

66. The method of embodiment 65, wherein the PMD_PowerChange.indication primitive is transmitted by a Physical Medium Dependent (PMD) layer entity.

67. A method for providing an inter-layer indication of the detection of the arrival of a new packet, the method comprising:

generating a PMD_NewPacketDetected.indication primitive; and
transmitting the PMD_NewPacketDetected.indication primitive to a Physical Layer Convergence Protocol (PLCP) entity and a Medium Access Control (MAC) layer entity, wherein the PMD_NewPacketDetected.indication primitive includes a NewPacketDetected and Time parameter.

68. The method of embodiment 67, wherein the PMD_NewPacketDetected.indication primitive is transmitted by a Physical Medium Dependent (PMD) layer entity.

69. A method for providing an inter-layer indication of power level changes during the reception of a packet, the method comprising:

generating a PHY-PowerChange.indication primitive; and
transmitting the PHY-PowerChange.indication primitive to a Medium Access Control (MAC) layer entity, wherein the PHY-PowerChange.indication primitive includes a PowerChange and Time parameter.

70. The method of embodiment 69, wherein the PHY-PowerChange.indication primitive is transmitted by a Physical Layer Convergence Protocol (PLCP) entity.

71. The method of embodiment 69, wherein the PHY-PowerChange.indication primitive is generated by a Physical Layer Convergence Protocol (PLCP) entity.

72. A method for requesting information on detected power level changes during previous or upcoming packet receptions, the method comprising:

generating a PMD_PowerChangeDetected.request primitive; and
transmitting the PMD_PowerChangeDetected.request primitive to a Physical Medium Dependent (PMD) layer entity, wherein the PMD_PowerChangeDetected.request primitive includes a PowerChangeThreshold and RequestMode parameter.

73. The method of embodiment 72, wherein the PMD_PowerChangeDetected.request primitive is transmitted by a Physical Layer Convergence Protocol (PLCP) entity.

74. The method of embodiment 72, wherein the PMD_PowerChangeDetected.request primitive is generated by a Physical Layer Convergence Protocol (PLCP) entity.

75. A method for requesting information on detected power level changes during previous or upcoming packet receptions, the method comprising:

generating a PHY_PowerChangeDetected.request primitive; and
transmitting the PHY_PowerChangeDetected.request primitive to a Physical Layer Convergence Protocol (PLCP) entity, wherein the PHY_PowerChangeDetected.request primitive includes a PowerChangeThreshold and RequestMode parameter.

76. The method of embodiment 75, wherein the PHY_PowerChangeDetected.request primitive is transmitted by a Medium Access Control (MAC) layer entity.

77. The method of embodiment 75, wherein the PHY_PowerChangeDetected.request primitive is generated by a Medium Access Control (MAC) layer entity.

78. A method for requesting information on detected changes during previous or upcoming packet receptions, the method comprising:

generating a PHY-RXChangeDetected.request primitive; and
transmitting the PHY-RXChangeDetected.request primitive to a Physical Layer Convergence Protocol (PLCP) entity, wherein the PHY-RXChangeDetected.request primitive includes a RequestedParameters, PowerChangeThreshold, and RequestMode parameter.

79. The method of embodiment 78, wherein the PHY-RXChangeDetected.request primitive is transmitted by a Medium Access Control (MAC) layer entity.

80. The method of embodiment 78, wherein the PHY-RXChangeDetected.request primitive is generated by a Medium Access Control (MAC) layer entity.

81. The method of embodiment 78, further comprising:

receiving a PHY-RXChangeDetected indication primitive, wherein the PHY-RXChangeDetected indication primitive includes information on detected changes during the reception of the previous Physical Layer Convergence Protocol (PLCP) Protocol Data Unit (PPDU) and wherein the PHY-RXChangeDetected indication primitive includes a DetectedEvent and Time parameter.

82. A method for transferring a unit of data and providing indications to a Medium Access Control (MAC) layer entity, the method comprising:

generating a PHY-DATA.indication primitive; and
transmitting the PHY-DATA.indication primitive to a Medium Access Control (MAC) layer entity, wherein the indications include an indication of a detection of a power level change, an indication of a decoding unreliability, and an indication of the arrival of a new packet of data during the reception of a current packet of data.

83. The method of embodiment 82, wherein the PHY-DATA.indication primitive is generated by a receiving Physical Layer Convergence Protocol (PLCP) entity.

84. A wireless transmit/receive unit comprising:

a receive unit configured to receive a packet;
a processing unit configured to detect a reception error that occurs during the reception of the packet; and
a transmit unit configured to transmit a negative acknowledgement (NACK) message on a condition that the processing unit detects the reception error, the NACK message including a medium access control (MAC) header and at least one field that includes information about the detected reception error.

85. A method of packet reception failure remediation, the method comprising a wireless transmit/receive unit (WTRU) receiving a packet.

86. The method as in any one of the previous embodiments, further comprising the WTRU detecting a reception error that occurs during the reception of the packet.

87. The method as in any one of the previous embodiments, further comprising the WTRU transmitting a negative acknowledgement (NACK) message on a condition that the processing unit detects the reception error.

88. The method as in any one of the previous embodiments, wherein the NACK message includes a medium access control (MAC) header and at least one field that includes information about the detected reception error.

89. The method as in any one of the previous embodiments, wherein the at least one field that includes the information about the detected reception error includes one or more of a field that indicates a type of the detected reception error, a field that includes details about the detected reception failure and a field that includes at least one recommended action for a WTRU that transmitted the packet to take in response to the detected reception error.

90. The method as in any one of the previous embodiments, wherein the NACK message includes all of the field that indicates the type of the detected reception error, the field that includes the details about the detected reception failure and the field that includes the at least one recommended action for the WTRU that transmitted the packet to take in response to the detected reception error.

91. The method as in any one of the previous embodiments, wherein the MAC header includes a frame control field that includes an indication that the current frame is a NACK frame, a duration field set to a value for which the NACK will reserve a medium, a receiver address field including an address of a WTRU that is to receive the NACK frame, a transmitter address field including an address of the WTRU that transmitted the NACK frame and a packet details field that specifies which one or more packet the NACK frame is related to.

92. The method as in any one of the previous embodiments, wherein the field that indicates the type of the detected reception error includes a value corresponding to one of a reception failure Case 1, a reception failure Case 2, a reception failure Case 3 or a reception failure Case 4.

93. The method as in any one of the previous embodiments, wherein a reception failure Case 1 is an error where the packet reception fails because the packet was transmitted with too aggressive a modulation and coding scheme (MCS) for the frame body.

94. The method as in any one of the previous embodiments, wherein a reception failure Case 2 is an error where the packet reception fails because the transmitted packet at least partially overlaps another transmitted packet.

95. The method as in any one of the previous embodiments, wherein a reception failure Case 3 is an error where the packet reception fails due to noise or white noise like interference.

96. The method as in any one of the previous embodiments, wherein a reception failure Case 4 is an error where the packet reception fails due to collision.

97. The method as in any one of the previous embodiments, wherein the field that includes the details about the reception failure includes, for a reception failure Case 2, a time at which the received packet was corrupted.

98. The method as in any one of the previous embodiments, wherein the field that includes the at least one recommended action for the WTRU that transmitted the packet to take in response to the detected reception error includes at least one of an MCS to use for transmissions to the WTRU, an indication to use request to send (RTS)/clear to send (CTS) for transmissions to the WTRU, an indication that retransmission should occur immediately, an indication of hybrid automatic repeat request (HARQ) transmission or an indication that a transmit power should be increased for transmissions to the WTRU.

99. The method as in any one of the previous embodiments, wherein a plurality of reception errors are detected, and the NACK message includes a field that indicates a number of packets that have not been correctly received and a plurality of additional fields, each one of the plurality of additional fields corresponding to a respective one of the number of packets that have not been correctly received.

100. The method as in any one of the previous embodiments, wherein each of the plurality of additional fields includes at least one subfield that includes information about the detected reception error and one or more of a subfield that indicates a type of the detected reception error, a subfield that includes details about the reception failure and a subfield that includes at least one recommended action for a WTRU that transmitted the packet to take in response to the detected reception error.

101. The method as in any one of the previous embodiments, wherein each of the plurality of additional fields includes all of the subfield that indicates a type of the detected reception error, the subfield that includes the details about the reception failure and the field that includes the at least one recommended action for the WTRU that transmitted the packet to take in response to the detected reception error.

102. The method as in any one of the previous embodiments, wherein the detecting the reception error includes at least one of: determining that the WTRU has not received a packet that it was scheduled to receive during a scheduled interval; or identifying that the WTRU is the intended recipient of a packet and the WTRU has identified a WTRU that transmitted the packet.

103. The WTRU as in any one of the previous embodiments, wherein the WTRU is one of a non-access point (non-AP) station (STA) or an AP.

104. The WTRU as in any one of the previous embodiments, wherein the WTRU is configured for WiFi.

105. A method of packet reception failure remediation, the method comprising a wireless transmit/receive unit (WTRU) receiving a message that includes information about a detected reception error.

106. The method as in any one of the previous embodiments, wherein the message is a negative acknowledgement (NACK) message that includes a medium access control (MAC) header and at least one field that includes the information about the detected reception error.

107. The method as in any one of the previous embodiments, wherein the at least one field that includes the information about the detected reception error includes one or more of a field that indicates a type of the detected reception error, a field that includes details about the detected reception failure and a field that includes at least one recommended action for a WTRU that transmitted the packet to take in response to the detected reception error.

108. The method as in any one of the previous embodiments, wherein the NACK message includes all of the field that indicates the type of the detected reception error, the field that includes the details about the detected reception failure and the field that includes the at least one recommended action for the WTRU that transmitted the packet to take in response to the detected reception error.

109. The method as in any one of the previous embodiments, wherein the MAC header includes a frame control field that includes an indication that the current frame is a NACK frame, a duration field set to a value for which the NACK will reserve a medium, a receiver address field including an address of a WTRU that is to receive the NACK frame, a transmitter address field including an address of the WTRU that transmitted the NACK frame and a packet details field that specifies which one or more packet the NACK frame is related to.

110. The method as in any one of the previous embodiments, wherein the field that indicates the type of the detected reception error includes a value corresponding to one of a reception failure Case 1, a reception failure Case 2, a reception failure Case 3 or a reception failure Case 4.

111. The method as in any one of the previous embodiments, wherein a reception failure Case 1 is an error where the packet reception fails because the packet was transmitted with too aggressive a modulation and coding scheme (MCS) for the frame body.

112. The method as in any one of the previous embodiments, wherein a reception failure Case 2 is an error where the packet reception fails because the transmitted packet at least partially overlaps another transmitted packet.

113. The method as in any one of the previous embodiments, wherein a reception failure Case 3 is an error where the packet reception fails due to noise or white noise like interference.

114. The method as in any one of the previous embodiments, wherein a reception failure Case 4 is an error where the packet reception fails due to collision.

115. The method as in any one of the previous embodiments, wherein the field that includes the details about the reception failure includes, for a reception failure Case 2, a time at which the received packet was corrupted.

116. The method as in any one of the previous embodiments, wherein the field that includes the at least one recommended action for the WTRU that transmitted the packet to take in response to the detected reception error includes at least one of an MCS to use for transmissions to the WTRU, an indication to use request to send (RTS)/clear to send (CTS) for transmissions to the WTRU, an indication that retransmission should occur immediately, an indication of hybrid automatic repeat request (HARQ) transmission or an indication that a transmit power should be increased for transmissions to the WTRU.

117. The method as in any one of the previous embodiments, wherein the NACK message includes a field that indicates a number of packets that have not been correctly received and a plurality of additional fields, each one of the plurality of additional fields corresponding to a respective one of the number of packets that have not been correctly received.

118. The method as in any one of the previous embodiments, wherein each of the plurality of additional fields includes at least one subfield that includes information about the detected reception error and one or more of a subfield that indicates the type of the detected reception error, a subfield that includes the details about the reception failure and a subfield that includes the at least one recommended action for the WTRU that transmitted the packet to take in response to the detected reception error.

119. The method as in any one of the previous embodiments, wherein each of the plurality of additional fields includes all of the subfield that indicates the type of the detected reception error, the subfield that includes the details about the reception failure and the subfield that includes the at least one recommended action for the WTRU that transmitted the packet to take in response to the detected reception error.

120. The method as in any one of the previous embodiments, further comprising, on a condition that a reception failure Case 1 is identified in the NACK, the WTRU performing at least one or more of not performing exponential backoff, increasing transmit power, decreasing an MCS, or following one or more recommended actions included in the NACK.

121. The method as in any one of the previous embodiments, further comprising, on a condition that a reception failure Case 2 is identified in the NACK, the WTRU performing at least one or more of not performing exponential backoff, using an RTS/CTS exchange for retransmitting the packet, using an RTS/CTS exchange for any future packets transmitted to the receiving WTRU, or following one or more recommended actions included in the NACK.

122. The method as in any one of the previous embodiments, further comprising, on a condition that a reception failure Case 3 is identified in the NACK, the WTRU performing at least one or more of not performing exponential backoff, increasing transmit power, or following one or more recommended actions included in the NACK.

123. The method as in any one of the previous embodiments, further comprising, on a condition that a reception failure Case 4 or unknown type of reception failure is identified in the NACK, the WTRU performing at least one or more of not performing exponential backoff, increasing transmit power or following one or more recommended actions included in the NACK.

124. The method as in any one of the previous embodiments, further comprising retransmitting at least one packet that was indicated as having the detected reception error along with at least one new packet transmission.

125. The method as in any one of the previous embodiments, wherein the retransmitting the at least one packet that was indicated as having the dedicated reception error along with the at least one new packet transmission includes transmitting at least one of an aggregated medium access control (MAC) protocol data unit (A-MPDU) or an aggregated physical (PHY) layer service data unit (A-PSDU).

126. The method as in any one of the previous embodiments, wherein the A-MPDU includes a plurality of retransmitted MPDU subframes and new MPDU subframes.

127. The method as in any one of the previous embodiments, wherein an MPDU header of the retransmission MPDU subframes remain the same as the original transmission.

128. The method as in any one of the previous embodiments, further comprising retransmitting only symbols of the original transmission that were associated with the detected reception error.

129. The method as in any one of the previous embodiments, wherein a MAC header of the original transmission is separately coded or terminated by padding zeros.

130. The method as in any one of the previous embodiments, wherein the MAC header of the original transmission is protected together with a MAC body by one frame check sequence (FCS).

131. The method as in any one of the previous embodiments, further comprising retransmitting only symbols of the original transmission that were associated with the detected reception error along with a new transmission.

132. The WTRU as in any one of the previous embodiments, wherein the WTRU is one of a non-access point (non-AP) station (STA) or an AP.

133. The WTRU as in any one of the previous embodiments, wherein the WTRU is configured for WiFi.

134. A wireless transmit/receive unit (WTRU) configured to perform the method as in any one of the previous embodiments.

135. An access point configured to perform the method as in any one of the previous embodiments.

136. A base station configured to perform the method as in any one of the previous embodiments.

137. A user equipment (UE) configured to perform the method as in any one of the previous embodiments.

138. An eNode-B configured to perform the method as in any one of the previous embodiments.

139. A network node configured to perform the method as in any one of the previous embodiments.

140. An IEEE 802.11 station (STA) configured to perform the method as in any one of the previous embodiments.

Although the solutions described herein consider IEEE 802.11-specific protocols, it is understood that the solutions described herein are not restricted to this scenario and are applicable to other wireless systems as well.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A method for use in an IEEE 802.11 station (STA), the method comprising:

   improperly receiving a packet within a received signal via a carrier sense multiple access (CSMA) wireless medium from a transmitting STA; and
   transmitting a negative acknowledgement (NACK) signal responsive to the packet having been improperly received;
   wherein the NACK signal includes a field indicating an action recommendation for the transmitting STA to remediate a reception failure cause.

2. The method of claim 1, wherein the NACK signal is based on a Physical Layer Convergence Protocol (PLCP) header of the packet having been improperly decoded.

3. The method of claim 2, wherein the NACK signal is based on a clear channel assessment (CCA) after a length of time indicated in the PLCP header of the packet.

4. The method of claim 3, further comprising:
   performing a Request to Send/Clear to Send (RTS/CTS) procedure to reserve a transmit opportunity (TXOP) for retransmission of the packet based on the CSMA wireless medium being busy.

5. The method of claim 3, further comprising:
   determining whether there was a sudden power level change during reception of the signal based on the CSMA wireless medium not being busy.

6. The method of claim 3, further comprising:
   performing a Request to Send/Clear to Send (RTS/CTS) procedure to reserve a transmit opportunity (TXOP) for retransmission of the packet based on a sudden power level change during reception of the signal.

7. The method of claim 5, further comprising:
   including, in the field indicating the action recommendation in the NACK signal, an indication to decrease a modulation and coding scheme (MCS), based on an MCS of a frame body of the packet being greater than the MCS of a preamble of the packet.

8. The method of claim 5, further comprising:

including, in the field indicating the action recommendation in the NACK signal, an indication to increase transmit power, based on a modulation and coding scheme (MCS) of a frame body of the packet being greater than an MCS of a preamble of the packet.

9. The method of claim 5, further comprising:
including, in the field indicating the action recommendation in the NACK signal, an indication to perform a mixed retransmission that includes retransmitting an aggregated medium access control (MAC) protocol data unit (A-MPDU), based on a modulation and coding scheme (MCS) of a frame body of the packet being greater than the MCS of a preamble of the packet.

10. The method of claim 2, further comprising:
on condition that the PLCP header of the packet is improperly decoded, determining whether a high power level was observed during reception of the packet.

11. The method of claim 10, further comprising:
including, in the field indicating the action recommendation in the NACK signal, an indication to increase transmit power, based on the high power level not being observed during reception.

12. The method of claim 10, further comprising:
including, in the field indicating the action recommendation in the NACK signal, an indication to immediately retransmit the packet, based on Short Training Field (STF) and/or Long Training Field (LTF) correlations being observed during reception of the packet.

13. The method of claim 1, further comprising:
sending a reporting and measurement capability message to the transmitting STA.

14. The method of claim 1, further comprising:
sending a reporting and measurement reporting message to the transmitting STA.

15. A wireless station (STA) comprising circuitry configured to perform a method as in any one of claims 1-14.

*FIG. 1A*

*FIG. 1B*

FIG. 1C

EP 4 492 862 A2

FIG. 2

300

CORRECT RECEPTION

| STFs | LTFs | REMAINING PLCP HEADER | PLCP CRC | FRAME BODY | FCS |
|------|------|----------------------|----------|------------|-----|

CCA BUSY

301    302    303    304    305    306

VAILD PLCP HEADER    310

VAILD PACKET

*FIG. 3*

400

401    402    403    404

| ELEMENT ID | LENGTH | OPTIONS | FIELD 1 | ○ ○ ○ | FIELD N |
|------------|--------|---------|---------|-------|---------|

405

410

| TYPE | CONTENTS |
|------|----------|

411

*FIG. 4*

500

501    502    503    504    505

| ELEMENT ID | LENGTH | OPTIONS | RESULTS | FIELD 1 | ○ ○ ○ | FIELD N |
|------------|--------|---------|---------|---------|-------|---------|

506

510

| TYPE | CONTENTS |
|------|----------|

511

*FIG. 5*

FIG. 6

FIG. 7

FIG. 8

900

FIG. 9

FIG. 10

FIG. 11

1210    1211    1212

| PHY LAYER MEASUREMENT | MAC LAYER STATISTICS MEASUREMENT | REFIRE MEASUREMENT REPORTING OPTIONS | 1200 |

1204

| ELEMENT ID | LENGTH | REFIRE MEASUREMENT AND REPORTING | UTILIZATION OF REFIRE MEASUREMENT REPORT |

1201    1202    1203

| PHY LAYER MEASUREMENT | MAC LAYER STATISTICS MEASUREMENT |

1220    1221

*FIG. 12*

1301    1302    1303

| ELEMENT ID | LENGTH | PHY AND MAC LAYER MEASUREMENT AND REPORTING | 1300 |

*FIG. 13*

1401    1402    1403

| NUMBER OF FIELDS | FIELD 1 | o o o | FIELD N | 1400 |

| ID | REFIRE MEASUREMENT PARAMETERS | REFIRE MEASUREMENT SPECIFICATION |

1404    1405    1406

*FIG. 14*

FIG. 15

FIG. 16

1700

1701 ⌐        1702 ⌐        1703 ⌐

| QACM HEADER | ACTION FRAME CATEGORY | ACTION VALUE BITMAP |
|---|---|---|

OCTETS:        2            0 OR 1          VARIABLE

*FIG. 17*

1800

1803

1804

B0    1801 ⌐   B1 B2   1802 ⌐        B7  B8  B9  B10 / B11 B12    / B15

| QACM FIELD TYPE | QACM FIELD LENGTH | I | G | ACI | MANAGEMENT FRAME SUBTYPE |
|---|---|---|---|---|---|

BITS:        2                    6             1   1    2            4

*FIG. 18*

1900

| 1902 | 1903 | 1904 | 1905 | 1906 | 1907 | 1908 | 1909 | 1910 |
|------|------|------|------|------|------|------|------|------|
| FRAME CONTROL | DURATION | RA | TA | PACKET DETAILS | RECEPTION FAILURE TYPE | RECEPTION FAILURE DETAILS | RECOMMENDED ACTIONS | FCS |

MAC HEADER

1901

*FIG. 19*

2000

| 2002 | 2003 | 2004 | 2005 | 2006 | 2007 | | 2008 | 2009 |
|------|------|------|------|------|------|---|------|------|
| FRAME CONTROL | DURATION | RA | TA | NUMBER OF FIELDS | FIELD 1 | ○ ○ ○ | FIELD N | FCS |

MAC HEADER

2001

| PACKET DETAILS | RECEPTION FAILURE TYPE | RECEPTION FAILURE DETAILS | RECOMMENDED ACTIONS |
|------|------|------|------|
| 2011 | 2012 | 2013 | 2014 |

*FIG. 20*

47

FIG. 21

FIG. 22

2300

PREAMBLE 2301

11ax SIG 2302

2303 PAYLOAD

THIS EXTRA SIGNALING FIELD MAY INCLUDE:
- A SUB-FIELD WHICH INDICATES THAT THIS IS A-MPDU TRANSMISSION WITH RETRANSMISSION(S) AND NEW TRANSMISSION(S)
- NUMBER OF RETRANSMITTED MPDUs
- HARQ ID OF EACH RETRANSMISSION
- LENGTH OF EACH RETRANSMISSION

RETRANSMISSION 2304

MPDU DELIMITER 2305

PAYLOAD 2306

PAD 2307

RETRANSMISSION 2308

MPDU DELIMITER

PAYLOAD 2310

PAD 2311

NEW TRANSMISSION 2309

MPDU DELIMITER 2312

PAYLOAD 2313

PAD 2314

2315

MPDU HEADER AND MPDU DELIMITER OF RETRANSMISSION MAY BE THE SAME AS THE FIRST TRANSMISSION. IF NO MPDU DELIMITER FOR THE FIRST TRANSMISSION, THE MPDU DELIMITER MAY BE REDEFINED.

MPDU HEADER 2316

PAYLOAD 2317

FCS 2318

FIG. 23

2400

MAC HEADER 2404

FCS 2405

MAC BODY 2407

FCS 2408

CODING & MODULATION 2406

PREAMBLE AND SIG 2401

OFDM SYMBOLS OF MAC HEADER 2402

OFDM SYMBOLS WITH PARTIAL RETRANSMISSION 2403

FIG. 24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61954429
- US 61990529
- US 61991090